(19) Europäisches Patentamt
European Patent Office
Office européen des brevets

(11) **EP 4 544 727 B1**

(12) **EUROPEAN PATENT SPECIFICATION**

(45) Date of publication and mention
of the grant of the patent:
**03.06.2026   Bulletin 2026/23**

(21) Application number: **23771922.4**

(22) Date of filing: **22.06.2023**

(51) International Patent Classification (IPC):
***H04L 9/00*** (2022.01)       ***H04L 9/30*** (2006.01)

(52) Cooperative Patent Classification (CPC):
**H04L 9/008; H04L 9/3013; H04L 9/3066;**
H04L 2209/08; H04L 2209/42

(86) International application number:
**PCT/HU2023/050040**

(87) International publication number:
**WO 2023/247981 (28.12.2023 Gazette 2023/52)**

(54) **CRYPTOGRAPHIC PSEUDONYM MAPPING METHOD, COMPUTER SYSTEM, COMPUTER PROGRAM AND COMPUTER-READABLE MEDIUM**

KRYPTOGRAFISCHES PSEUDONYMABBILDUNGSVERFAHREN, COMPUTERSYSTEM, COMPUTERPROGRAMM UND COMPUTERLESBARES MEDIUM

PROCÉDÉ DE MAPPE CRYPTOGRAPHIQUE DE PSEUDONYMES, SYSTÈME INFORMATIQUE, PROGRAMME D'ORDINATEUR ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.06.2022   HU 2200234**

(43) Date of publication of application:
**30.04.2025   Bulletin 2025/18**

(73) Proprietor: **XTENDR ZRT.**
**1037 Budapest (HU)**

(72) Inventors:
• **BÁGYONI-SZABÓ, Attila**
**2600 Vác (HU)**
• **VÁGUJHELYI, Ferenc**
**1037 Budapest (HU)**

(74) Representative: **Kereszty, Marcell**
**Gödölle, Kékes, Mészaros & Szabo**
**Patent and Trademark Attorneys**
**Keleti Karoly u. 13/b.**
**1024 Budapest (HU)**

(56) References cited:
**WO-A1-2021/009528**

• CAMENISCH JAN ET AL: "Privacy-Preserving User-Auditable Pseudonym Systems", 2017 IEEE EUROPEAN SYMPOSIUM ON SECURITY AND PRIVACY (EUROS&P), IEEE, 26 April 2017 (2017-04-26), pages 269 - 284, XP033113316, DOI: 10.1109/EUROSP.2017.36

## Description

TECHNICAL FIELD

The invention relates to a cryptographic pseudonym mapping method, a computer system, a computer program and a computer-readable medium.

BACKGROUND ART

The document WO 2021/009528 A1 entitled "Cryptographic pseudonym mapping method, computer system, computer program and computer-readable medium" discloses a cryptographic method allowing many mutually independent entities - hereinafter: data sources - forming a decentralised system to unify the data sets or data streams in their possession by replacing the identifiers of the entities (e.g. persons, companies, geographical locations) stored therein with pseudonyms such that each entity receives a secret but unique identity (always the same pseudonym is generated from the same identifier, while from different identifiers always or almost always different pseudonyms are generated, independent of which data source is the originator of the data), i.e., data that originate from different data sources but correspond to the same entity can be connected together based on the pseudonyms. The method disclosed in the referenced document also provides that the anonymity provided by the pseudonyms is cryptographically secure even in case there is a malicious collusion between some of the entities adapted for mapping the pseudonyms - hereinafter: mappers - in order to crack anonymity. However, this known technical solution is not able to provide adequate protection in the case of a similar malicious collusion between a data source and a mapper.
The problem to be solved is characterised by the following:

1. Many mutually independent participants (hereinafter: data sources)
2. possess data records containing data related to entities (e.g., private individuals, companies),
3. said data records also containing data applicable for identifying the entities (hereinafter: entity identifiers, these can for example be identity card numbers),
4. said data records are to be submitted by the data sources to a (distributed or centralised) data collection system (e.g., for analysis),
5. and in which data records the data sources intend (e.g., due to the sensitive nature of the data) to replace the entity identifiers with artificial identification numbers (hereinafter: pseudonyms) before submitting the data for data collection,
6. of which pseudonyms it is required (e.g., because the analysis to be performed on the data requires it) that

   a. data corresponding to a given entity must be able to be connected together based on the pseudonyms,
   b. a given entity identifier must always be replaced by the same pseudonym, irrespective of which data source possesses the given data record,
   c. however, none of the data sources (or other participants) should be able to gather any extra information in addition to the information described in the preceding two points based on the pseudonyms (or the process generating them),
   d. with a special regard to ensuring that it is not possible to find out which entity identifier is replaced by a given pseudonym.

7. These measures are to be taken by the data sources in the most secure manner possible, paying special attention to the following:

   a. that neither the data sources nor any external entity needs to be assigned special roles or permissions, and
   b. that the requirements set for the pseudonyms are met even in case there is a malicious collusion between the data sources (the malicious collusion involving even the operator of the data collection system).

The prior art relevant to the industrial field includes a number of devices aimed at the solution of this complex problem, but these usually have serious shortcomings from the aspects of security or usability. According to one of the most frequently applied methods, the pseudonym is obtained from the entity identifier by a hash function.
Although this solution is able to prevent a trivial discovery of the relationship between the entity identifiers and the pseudonyms, it is of no use against targeted attacks aimed at cracking the anonymity of a particular entity, because any identifier can be mapped to the corresponding pseudonym by any one of data sources by itself.
Another problem that is similar to the above-mentioned one, and has relevance especially in academic circles, is the so-called "secure equality test" (see e.g., Geoffroy Couteau: New Protocols for Secure Equality Test and Comparison, Applied Cryptography and Network Security (pp. 303-320), ISSN 0302-9743). However, the secure equality test cannot be applied for solving the present problem for a number of reasons. First, if the entity identifiers were compared by the data sources applying the secure equality test, it would mean that each data source could discover which other data sources possess data on the entities on which the given data source has data records (for example, a bank could easily discover which of its clients have accounts at which other banks). This can be considered as extra information, so the pseudonymisation requirements are not met. On the other hand, in order to utilize the secure equality test for pseudonymisation, every entity identifier would have to be compared with every other entity identifier. From the aspect of computation complexity, this would be a protocol running in time $O(n^2)$, i.e., computation time would be squarely proportional to the number of data records to be pseudonymised. Thereby, the processing of new data records would take progressively more and more time, which cannot be tolerated in the long run.

A decentralised system for pseudonymisation according to the above is disclosed in the document WO 2021/009528 A1 that has already been mentioned. This known technical solution is significantly better suited to the objective than the above-mentioned solutions, but it does not entirely fulfil the requirements laid down in points 7.a) and 7.b) above. The present invention is intended to remedy these shortcomings.

It is not even a trivial undertaking to provide a data collection system wherein the collected data cannot be traced back to their origin. Attack vectors related to this can be for example:

- A data source intentionally submits data records containing extreme or outlier data values such that it can easily find them among the collected data records.
- An attacker eavesdrops on the network connections, and based on the traffic it infers the route of specific data.
- A data source submits a data record at a time when the data collection system has low traffic so that it can safely assume that the next record appearing among the collected data records originates from it.

A well-known solution to the problems listed above is the application of mix networks (see David Chaum, Untraceable electronic mail, return addresses, and digital pseudonyms, Communications of the ACM, February 1981, Volume 24, Number 2). A distributed data collection system applying a mix network is disclosed for example in the document US 2011/0202764 A1. However, this prior art technical solution does not contain a pseudonymisation solution, so the collected data cannot be connected with each other on the basis of the entities they correspond to, at least not without compromising the anonymity of the entities.

In the technical solution disclosed in the document WO 2021/009528 A1 the mappers must know which key they are supposed to utilize in a given mapping process, for example they must know the unique identifier of the key to be utilized. This means that the last mapper in the mapping sequence will be able to see both the mapped pseudonym and the key utilized for generating it. This, in turn, opens up a possibility for data marking attack methods: although the generated pseudonym conceals the identity of the original entity, the key utilized for pseudonymisation works as a unique identifier, based on which the pseudonym can be potentially traced back to the unencrypted entity identifier. Such an attack can be implemented for example such that one of the mappers secretly colludes with a data source. If this mapper generates such a pseudonym that originally comes from the data source colluding with it, it is enough for the data source to know which key was used by the mapper for generating the given pseudonym. In case there is a large number of mappers in the system, such a cooperation can succeed only rarely, but on some occasions it can be successful.

One of the possibilities for preventing that is to occasionally utilize the same key for more than one pseudonyms. This, however, causes further problems, for example that a data source will sometimes submit the same encrypted identifier more than once - from which it becomes evident that it submitted data on the same entity on both occasions. The problem fundamentally stems from the fact that information on the keys that are to be applied for mapping the given pseudonym is shared with the mappers.

Another (and even more fundamental) problem related to the solution described in the document WO 2021/009528 A1 is that the system is vulnerable against the so-called "chosen plaintext" attacks: if a malicious data source intends to discover the pseudonym corresponding to an entity identifier D, all it has to do is randomly select an integer m, and request the pseudonymisation of the identifiers D and $D^m \bmod N$. Of course, the latter will almost never be an identifier corresponding to a real entity, however this cannot be checked by the other participants of the mapping as it is seen by them only in encrypted form. These values will generate the pseudonyms $D^b \bmod N$ and $D^{mb \bmod \varphi(N)} \bmod N$, respectively. This means that in case the data source carrying out the attack finds among the mapped pseudonyms such a value $P_1$ and a value $P_2$ that $(P_1)^m \equiv P_2 \bmod N$, then it can be almost sure that $P_1$ is the pseudonym generated from the entity identifier D. Moreover, because the value of m is known only by the attacker, the other entities participating in the mapping will not even know that there has been an attack.

The latter vulnerability follows directly from the formula defining the mapping of the identifiers to the pseudonyms, i.e., it is an inherent property thereof. Therefore, two mitigation options suggest themselves.

Firstly, such organisational measures must be taken - in line with the principles of data protection - which provide that the mappers can never access the unencrypted identifiers, and that no other entities but the mappers can access the pseudonyms. Any entity that intends to analyse the pseudonymised data will receive data mapped utilizing an encryption key generated for the purposes of the given data request. This must be applied in the manner described in relation to the report key (ak.rep.i.enc) defined in the document WO 2017/141065 A1. In the case of such a restricted-access pseudonymised database it is also possible to individually assess the properties of the submitted information from the aspect of whether the entity performing data analysis will be able to repeatedly assign certain elements of the information to the entity (for example, natural person), to which they originally belonged. In this case, such metrics or a combination thereof may also be applied to the data waiting to be submitted as for example the k-anonymity, l-diversity, unique subnetwork topology, etc., with the help of which the risk can be assessed objectively.

If it is not feasible to protect the pseudonymised database against access by entities other than the mappers, then it is not enough to modify only the steps of the process, i.e., the formula defining pseudonymisation must also be reconsidered - in such cases the selection of attributes attached to the pseudonyms in unencrypted form must be performed carefully - such that it is not possible to use those for data marking.

A cryptographic algorithm applying ElGamal public keys for data submission is disclosed in the following conference publication: Zengqiang Wu et al.: ElGamal Algorithm for Encryption of Data Transmission, 2014, International Conference on Mechatronics and Control (ICMC), IEEE, https://doi.org/10.1109/ICMC.2014.7231798, 3 September 2015.

A cryptographic communication method utilizing public key encryption is disclosed in the document US 2002/0041684 A1.

The prior art documents - either in themselves or in combination - do not refer to the possibility that, through the application of suitable mathematical structures the cyclic group forming the message space of an ElGamal-type encryption system can serve as a subgroup of an automorphism group of another cyclic group, such that the solution of the Diffie-Hellman decision problem is not known for either algebraic group (preferably both algebraic groups are Schnorr groups), so the security of the ElGamal ciphers or the anonymity provided by the pseudonyms generated from the messages contained in the ElGamal ciphers is not compromised in the process. In lack of such mathematical structures, the prior art technical solutions may qualify as being vulnerable to exponent-attributing types chosen plaintext and chosen ciphertext attacks.

The primary objective of the present invention is to provide that the anonymity of the pseudonymised entities is protected cryptographically even in the case of a malicious collusion between a data source and a mapper. Another objective of the invention is to provide protection against any such cryptographical attacks that are protected against by the prior art technical solution - i.e., among others, against "brute force" attacks. Another objective of the invention is to exploit the advantages offered by mix networks.

The present invention therefore essentially intends to solve similar problems as the technical solutions disclosed in the document WO 2021/009528 A1 and the document WO 2017/141065 A1 referenced therein, but at the same time it also aims at providing that the secure operation of the system does not require additional organizational regulations, i.e., that each participating entity is able to control their own data security.

In most real-world situations the database also stores the attributes of the entities in addition to their identifiers (e.g., the data source is a plasma company, the entities are the donors, and the stored entity attribute is the yearly number of plasma donations by the given donor at the given plasma company). In many cases the attribute itself carries sufficient information for identifying the given entity. In such situations it is considered a security risk endangering the anonymity of the pseudonyms to attach the attribute to the pseudonym in an unaltered form. Therefore, if the field of application requires storing attributes in addition to the pseudonyms, it is not sufficient to pseudonymise only the entity identifiers, but the attributes must also be transformed such that they cannot be applied for differentiating between the entities.

One of the ways to achieve that is to reduce the accuracy of the attributes (for example, if the attribute is a GPS coordinate, accuracy can be reduced by omitting the last few digits) until the resulting attribute value is not accurate enough for identification. However, the actual anonymity of the entities it is not guaranteed even by this method, and in many cases the deterioration of the quality of the attributes is not allowable.

It is therefore expedient to devise such a partial solution that - in parallel with the calculation of the pseudonyms - encrypts the attributes in such a manner that neither of the entities participating in the system are able to decrypt even one of them on its own, and that the decryption of any attribute can be performed only by the mutual consent of all mappers. It should be noted that this partial solution is not a mandatory element of the invention, i.e., it is included optionally in the pseudonymisation process, and its steps can be carried out simultaneously or alternating with the steps of the pseudonymisation process. This encryption preferably also has a homomorphic property allowing that simple calculations (e.g., multiplication) can be performed on the encrypted attributes without decrypting them while also allowing that the results - and only the results - of the calculation can be decrypted. In comparison with the application of unencrypted attributes, this is preferable because unencrypted attributes can be utilized for data marking attacks, and also because utilizing homomorphic encryption allows that the concrete data points utilized during the calculations are never made public, so overall less such information is generated that might jeopardize the anonymity of the data.

DESCRIPTION OF THE INVENTION

The primary object of the present invention is therefore to provide a cryptographic pseudonym mapping method that is based on the prior art technical solutions and is able to remedy both of the previously mentioned vulnerabilities.

The objects of the invention have been fulfilled by providing the cryptographic pseudonym mapping method according to claim 1, the computer system according to claim 10, the computer program according to claim 14, and the computer-readable medium according to claim 15.

Preferred embodiments of the invention are defined in the dependent claims.

For implementing the invention such a public key encryption system is required that can be defined over any cyclic group and supports:

a. the secure generation of such a public key, from an arbitrary number of private keys, that its ciphers can only be decrypted by performing a chain of decryption operations applying all of the applied private keys (in an arbitrary order),
b. the randomization of a cipher (i.e., the modification thereof such that it encodes the same message and, knowing the previous cipher, it is still indistinguishable from a cipher encoding a random value),
c. the homomorphic multiplication of a cipher by group element,
d. the homomorphic exponentiation of a cipher.

According to the invention, the ElGamal-type public key encryption system has all these properties and is thus excellently suited for application for the purposes of the invention.

The present invention has been provided expressly for eliminating the above-described chosen-plaintext/chosen-ciphertext vulnerabilities affecting the method disclosed in the document WO 2021/009528 A1, and for eliminating further vulnerabilities potentially arising therefrom. These vulnerabilities cannot be eliminated solely by the application of the ElGamal-type encryption system, as the ElGamal-type encryption system is itself vulnerable to chosen-ciphertext attacks. According to the invention, the ElGamal encryption system is applied in an indirect manner, for calculating such a function (see the equations 2.0.1 and 2.0.2 below) against which such attack types are not successful.

In comparison with the system described in the document WO 2021/009528 A1, the system is characterised by the following:

1. The formula defining the mapping of the identifiers to pseudonyms is chosen such that any arithmetic relationships between two or more identifiers should be undetectable based on the pseudonyms generated therefrom without knowing the secret keys of the mapping. Thus, for example, in case an entity identifier D and its square are both pseudonymised, there will not be any unique mathematical relationship between the generated pseudonyms. Thereby, the system will not be vulnerable against "chosen plaintext" attacks exploiting such mathematical relationships - while in the case of the technical solution according to WO 2021/009528 A1 such attacks - although detectable in certain situations (for example in case the fake identifier causes a detectable anomaly in the distribution or topology of the pseudonyms) - cannot be prevented or defended against.
2. Such an algorithm is applied by the data sources and the mappers for generating the unique keys actually utilized by them from the random numbers they generate and keep secret that it is not necessary to identify them. Thus, the data source does not need to attach (assign) the unique identifier of the key applied for encryption to the encrypted entity identifier, which identifier could be potentially utilized for a data marking attack.

Even if such a system includes only a single honest mapper, then it is not possible to establish a relationship between the entity identifier and the pseudonym. This cannot be maintained of the system according to WO 2021/009528 A1, wherein a collusion between even only a single malicious mapper and a data source allows the generation of a rainbow table, and thereby the cracking of anonymity; however, the fact that other entities also participate in performing the mappings guarantees that a brute force attack cannot go undetected.

In addition to transforming static databases, the present invention also relates to the transformation databases updated time-to-time. For example, such databases may include hotel guest databases wherein new data are regularly entered as new guests are received. In the case of such regularly updated databases the method described in this specification is able to transform the new data records consistently with previously generated ones. The present invention is also related to the transformation of data streams. (By "data stream", in this case there is meant a sequence of information-representing digitally encoded signals being transmitted or broadcast.)

BRIEF DESCRIPTON OF THE DRAWINGS

Preferred embodiments of the invention are described hereinafter by way of example with reference to the following drawings, where

Figs. 1A, 1B are schematic diagrams of the generation process of a first ElGamal public key applying a solution according to the invention,

Figs. 2A, 2B show schematic diagrams of the generation process of a second ElGamal public key applying a solution according to the invention,

Figs. 3A, 3B show schematic diagrams of the generation process of ElGamal ciphers adapted to be decrypted utilizing ElGamal private keys in a solution according to the invention, and

Figs. 4A, 4B, 4C show schematic diagrams of the mapping process applied in a technical solution according to the invention.

MODES FOR CARRYING OUT THE INVENTION

Like in the technical solution set forth in the document WO 2021/009528 A1, it is supposed that the system consists of more than one (a number n of) data sources and more than one (a number k of) mappers. The data sources will hereinafter be denoted by $DS_i$, with the mappers being denoted by $M_j$ - therefore, $DS_1, DS_2, ... DS_n$ denotes a series of all data sources, while $M_1, M_2, ... M_k$ denotes a series of all mappers.

Cryptographic structure

The basis of the pseudonymisation method is formed by an algebraic group G (which is a cyclic group) and a set H which is a subset of integers being coprime to $\varphi$ that forms an algebraic group with regard to modulo $\varphi$ multiplication. For carrying out the method it is not necessary (and it is even practically impossible) to list all the elements of the group G or the set H; it is sufficient if there exists an effective algorithm that is able to decide whether a given object is an element of the group G or of the set H.

The order (i.e., the number of the elements) of the group G will be denoted in this document by the symbol $\varphi$, with a generator element g being also designated in the group G.

A further basis of the pseudonymisation system is formed by a mapping

$$h: \mathbb{N} \to \{0, 1, 2, ... , (\varphi - 1)\}$$

where N denotes the set of nonnegative integer numbers. For example, this can be a cryptographic hash function (see e.g., in Wikipedia), or even the modulo $\varphi$ function (yielding h(x) = x mod $\varphi$ for each nonnegative integer x). It is strongly recommended, i.e., preferable, that h be a cryptographic hash function.

Denotations

If a and b are integers, then the expression (a, b) denotes in all cases the ordered pair consisting of the numbers a, b.

In this document, ElGamal encryption is defined over the modulo $\varphi$ multiplicative group of integers, therefore:

-    By an ElGamal private key, a positive integer between 1 and $\varphi$ is meant.
-    By an ElGamal public key such a number pair K = (w, z) is meant where w and z are both integers that are relatively prime to $\varphi$. In this case, the integers w and z are called the components of the ElGamal public key K.
-    By an ElGamal cipher such a number pair C = ($c_1$, $c_2$) is meant where $c_1$ and $c_2$ are both integers that are relatively prime to $\varphi$. In this case, the integers $c_1$ and $c_2$ are called the components of the ElGamal cipher C.

ElGamal encryption

If K = (w, z) is an ElGamal public key, then in this document the expression ElGamalEnc$_K$(m) denotes the cipher of the message m generated utilizing the key K applying ElGamal encryption over the modulo $\varphi$ multiplicative group of integers, i.e.:

$$\text{ElGamalEnc}_K(m) = (w^y \bmod \varphi, \ m \cdot z^y \bmod \varphi),$$

where the value of y is an integer number chosen randomly between 1 and $\varphi$ with a uniform distribution by the entity performing the encryption (this is an ephemeral key, i.e., a different value must be chosen each time).

Decryption (partial decryption) of an ElGamal cipher

If $C = (c_1, c_2)$ is an ElGamal cipher and x is an ElGamal private key, then the expression $\text{ElGamalPartialDec}_x(C)$ means the following:

$$\text{ElGamalPartialDec}_x(C) = (c_1^x \bmod \varphi, \ c_2)$$

Resolving an ElGamal cipher

If $C = (c_1, c_2)$ is an ElGamal cipher, then the expression $\text{ElGamalResolve}(C)$ denotes the following value:

$$\text{ElGamalResolve}(C) = (((c_1)^{-1} \bmod \varphi) \cdot c_2) \bmod \varphi$$

Here, the expression $(c_1)^{-1} \bmod \varphi$ denotes the multiplicative inverse modulo $\varphi$ of the value $c_1$. This value can be generated for example by applying the Euclidean algorithm.

Rerandomization of an ElGamal cipher

If $C = (c_1, c_2)$ is an ElGamal cipher and $K = (w, z)$ is an ElGamal public key, then the expression $\text{ElGamalRerand}_K(C)$ denotes the rerandomization of the cipher C, i.e.:

$$\text{ElGamalRerand}_K(C) = (c_1 \cdot w^y \bmod \varphi, \ c_2 \cdot z^y \bmod \varphi),$$

where the value of y is an integer number chosen randomly between 1 and $\varphi$ with a uniform distribution by the entity performing the rerandomization (this is an ephemeral key, i.e., a different value must be chosen each time).

Rerandomization of an ElGamal key

If $K = (w, z)$ is an ElGamal public key, then the expression $\text{ElGamalKeyRerand}(K)$ denotes the rerandomization of the key K, i.e.:

$$\text{ElGamalKeyRerand}(K) = (w^y \bmod \varphi, \ z^y \bmod \varphi),$$

where the value of y is an integer number chosen randomly between 1 and $\varphi$ with a uniform distribution by the entity performing the rerandomization (this is an ephemeral key, i.e., a different value must be chosen each time).

Multiplication by a scalar of an ElGamal cipher

If $C = (c_1, c_2)$ is an ElGamal cipher and $\lambda$ is an arbitrary integer, then the expression $C \otimes \lambda$ is used for denoting the product by the scalar $\lambda$ of the cipher C, i.e.:

$$C \otimes \lambda = (c_1, \ c_2 \cdot \lambda \bmod \varphi)$$

Exponentiation of an ElGamal cipher

If $C = (c_1, c_2)$ is an ElGamal cipher and $\lambda$ is an arbitrary integer, then the expression $C^\lambda$ is used for denoting the $\lambda$-th power of the cipher C, i.e.:

$$C^\lambda = (c_1^\lambda \bmod \varphi, \ c_2^\lambda \bmod \varphi)$$

Addition of a private key to an ElGamal public key

If $K = (w, z)$ is an ElGamal public key and x is an ElGamal private key, then the expression $K \oplus x$ denotes the following pair of values:

$$K \oplus x = (w, z^x \bmod \varphi)$$

Removal of a private key from an ElGamal public key

If K = (w, z) is an ElGamal public key and x is an ElGamal private key, then the expression K $\ominus$ x denotes the following pair of values:

$$K \ominus x = (w^x \bmod \varphi, \ z)$$

Equivalence of ElGamal ciphers

If x is an ElGamal private key and B and C are ElGamal ciphers, then the expression $B \overset{x}{\cong} C$ denotes the following statement:

$$\mathrm{ElGamalResolve}\big(\mathrm{ElGamalDecrypt}_x(B)\big) = \mathrm{ElGamalResolve}\big(\mathrm{ElGamalDecrypt}_x(C)\big)$$

Informally, this can be phrased as the ciphers B and C "encode" the same message.

Key exchange process

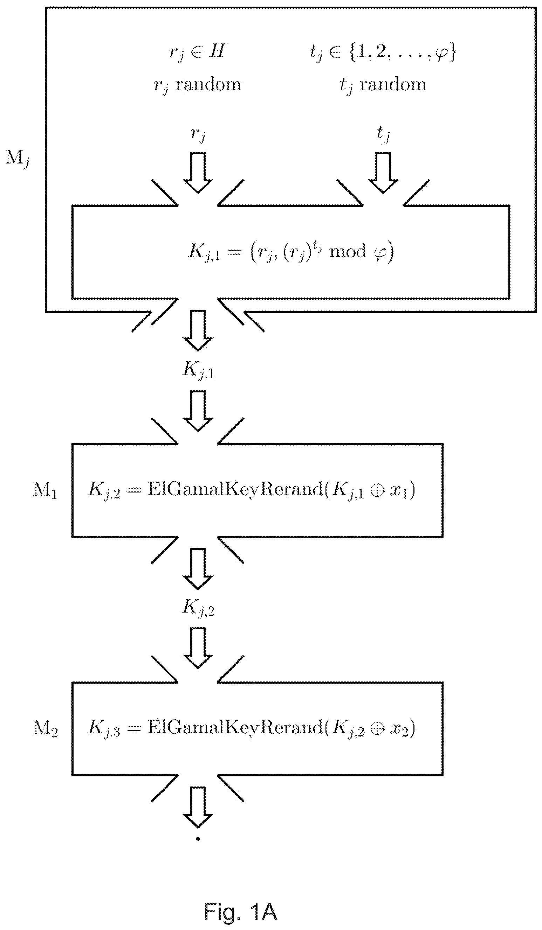

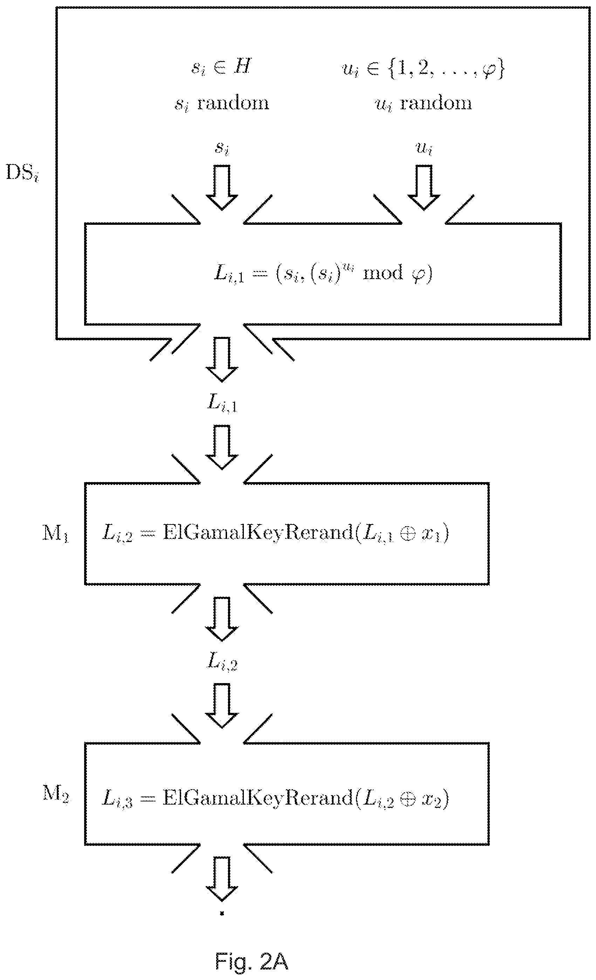

Preparing the pseudonymisation system requires the preparation of the keys of the mappers $M_j$ and the data sources $DS_i$. In this section, the steps of this process are described in relation to Figs. 1A-1B, and Figs. 2A-2B.

According to the invention, by random selection it is meant that the implementation of the method is not dependent on the particular elements of the given set that are chosen. Accordingly, random selection is meant to include also quasi-random or pseudo-random selection, as well as all such selection methods (even according to rules unknown to an observer) wherein the selection appears to be random to the outside observer. If the set constitutes an algebraic structure, then, if it has a null element and/or a unit element, then it/they are not regarded as randomly selected. However, for cryptography considerations it is worth selecting values for which the bit length of their representation fills up all the available space.

Generation of private keys

The following two steps must be performed for each index j = 1, 2, ..., k:

1.1.1 The mapper $M_j$ randomly selects for itself - preferably according to a uniform distribution - an integer $x_j$ and an integer $\alpha_j$ between 2 and $\varphi$. These values are chosen independently of each other.
1.1.2 The mapper $M_j$ randomly selects for itself - preferably according to a uniform distribution - an integer $b_j$ from the set H.

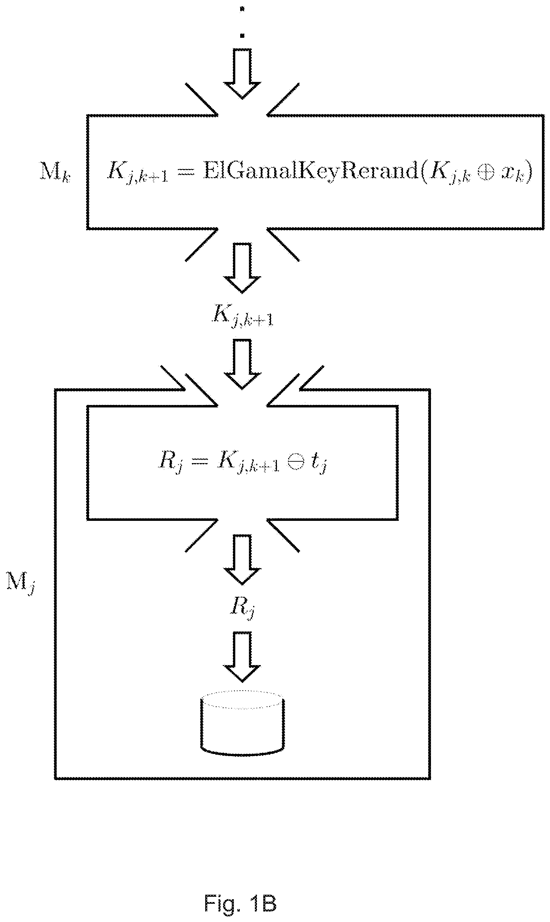

The values $b_j$, $x_j$, and $\alpha_j$ are kept secret by the mapper $M_j$ because they are qualified as secret cryptographic keys.
The values $b_j$, $x_j$, and $\alpha_j$ cannot be changed during the pseudonymisation process.
Exchange of the distributed ElGamal keys of mappers (Figs. 1A and 1B)
The following steps must be carried out for each index j = 1, 2, ..., k:

1.2.1 The mapper $M_j$ randomly chooses - preferably according to a uniform distribution - an integer $r_j$ between 1 and $\varphi$ from the set H.
1.2.2 The mapper $M_j$ randomly chooses - preferably according to a uniform distribution - an integer $t_j$ between 1 and $\varphi$.
1.2.3 The mapper $M_j$ generates the ElGamal public key $K_{j,1} = (r_j, (r_j)^{t_j} \bmod \varphi)$.
1.2.4 The mapper $M_j$ sends the public key $K_{j,1}$ to the mapper $M_1$ (if j = 1, this step can be omitted).
1.2.5 For each index $\tau$ = 1, 2, ..., k, in this order, the mapper $M_\tau$ checks if the first and second components of the ElGamal public key $K_{j,\tau}$ are elements of the set H, and, if the result of the check is positive, it calculates the public key $K_{j,\tau+1} = \mathrm{ElGamalKeyRerand}(K_{j,\tau} \oplus x_\tau)$ from the ElGamal public key $K_{j,\tau}$, and, if $\tau$ < k, sends it to the mapper $M_{\tau+1}$.
1.2.6 The mapper $M_k$ sends the ElGamal public key $K_{j,k+1}$ to the mapper $M_j$.
1.2.7 The mapper $M_j$ generates and stores the first ElGamal public key $R_j = K_{j,k+1} \ominus t_j$.

Note: for each index j = 1,2, ..., k the key $R_j$ is a public key corresponding to the ElGamal private key $x_1 \cdot x_2 \cdot ... \cdot x_k$.

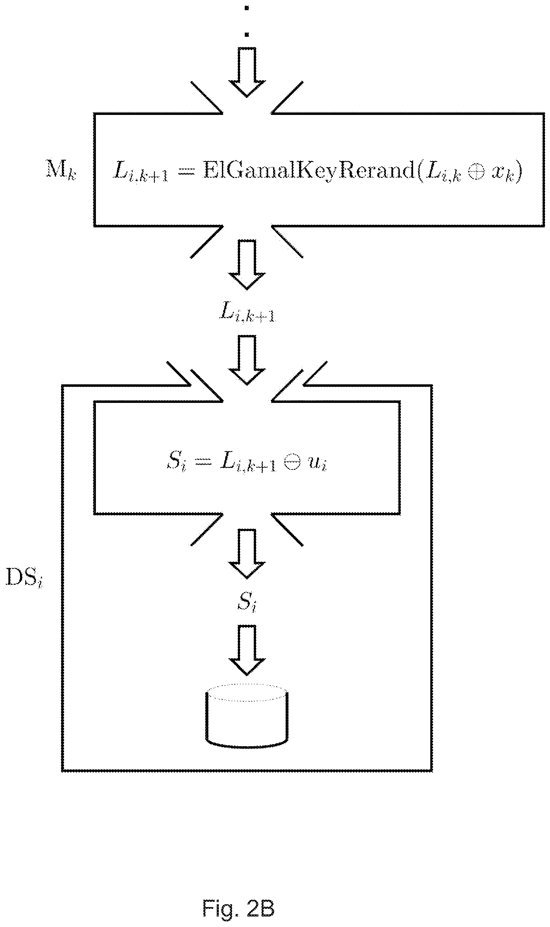

Key exchange of the distributed ElGamal keys of the data sources (Figs. 2A and 2B) The following steps must be carried out for each index i = 1, 2, ..., n:

1.3.1 The data source $DS_i$ randomly chooses - preferably according to a uniform distribution - an integer $s_i$ between 1 and $\varphi$ from the set H.

1.3.2 The data source $DS_i$ randomly chooses - preferably according to a uniform distribution - an integer $u_i$ between 1 and $\varphi$.

1.3.3 The data source $DS_i$ generates the ElGamal public key $L_{i,1} = (s_i, (s_i)^{u_i} \bmod \varphi)$.

1.3.4 The data source $DS_i$ sends the ElGamal public key $L_{i,1}$ to the mapper $M_1$.

1.3.5 For each index $\tau$ = 1, 2, ..., k, in this order, the mapper $M_\tau$ checks if the first and second components of the ElGamal public key $L_{i,\tau}$ are elements of the set H, and, if the result of the check is positive, it calculates the public key $L_{i,\tau+1}$ = ElGamalKeyRerand($L_{i,\tau} \oplus x_\tau$) from the ElGamal public key $L_{i,\tau}$, and, if $\tau < k$, sends it to the mapper $M_{\tau+1}$.

1.3.6 The mapper $M_k$ sends the ElGamal public key $L_{i,k+1}$ to the data source $DS_i$.

1.3.7 The data source $DS_i$ generates and stores the second ElGamal public key $S_i = L_{i,k+1} \ominus u_i$.

Note: for each index i = 1,2, ..., n the key $S_i$ is a public key corresponding to the ElGamal private key $x_1 \cdot x_2 \cdot ... \cdot x_k$.

The mapping h adapted to assign integer numbers to the entity identifiers is required in order that the entity identifier D is converted to a form that can be interpreted by the mathematical function defining pseudonymisation. The first and second ElGamal public keys $R_i$, $S_i$ are in turn adapted for securely calculating the mathematical function defining pseudonymisation.

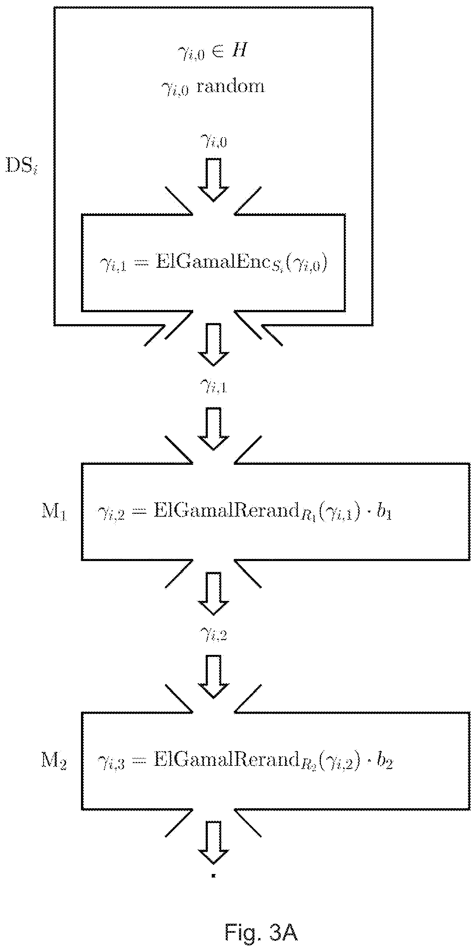

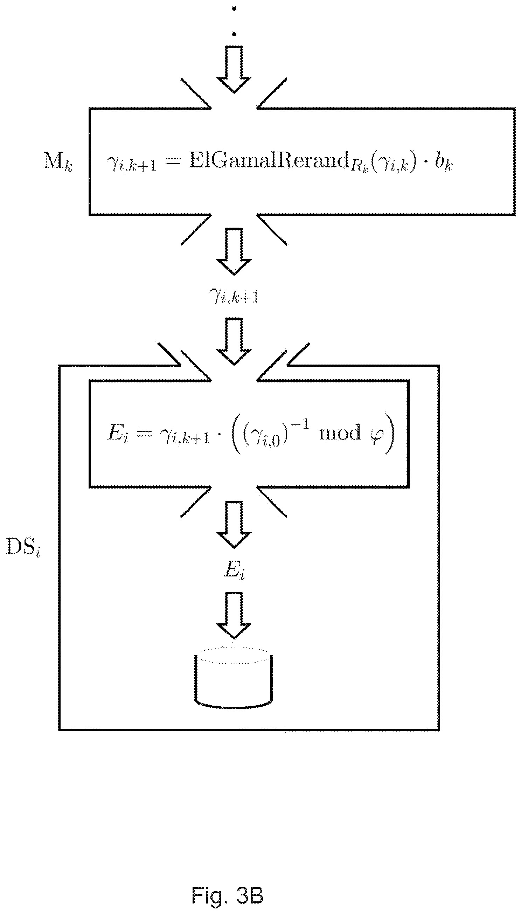

Exchange of distributed ElGamal ciphers (Figs. 3A and 3B)

The following steps must be carried out for each index i = 1, 2, ..., n:

1.4.1 The data source $DS_i$ randomly chooses - preferably according to a uniform distribution - a value $\gamma_{i,0}$ from the set H.

1.4.2 The data source $DS_i$ generates the cipher $\gamma_{i,1}$ = ElGamalEnc$_{S_i}(\gamma_{i,0})$.

1.4.3 The data source $DS_i$ sends the cipher $\gamma_{i,1}$ to the mapper $M_1$.

1.4.4 For each index j = 1, 2, ..., k, in this order, the mapper $M_j$ checks if the first and second components of the ElGamal cipher $\gamma_{i,1}$ are elements of the set H, and, if the result of the check is positive, it calculates the cipher $\gamma_{i,j+1}$ = ElGamalRerand$_{R_j}(\gamma_{i,j}) \cdot b_j$ from the ElGamal cipher $\gamma_{i,j}$, and, if j < k, sends the cipher $\gamma_{i,j+1}$ to the mapper $M_{j+1}$.

1.4.5 The mapper $M_k$ sends the cipher $\gamma_{i,k+1}$ to the data source $DS_i$.

1.4.6 The data source $DS_i$ generates and stores the cipher $E_i = \gamma_{i,k+1} \cdot ((\gamma_{i,0})^{-1} \bmod \varphi)$.

Note: it can be seen that for each index i = 1, 2, ..., n

$$E_i \overset{x_1 \cdot x_2 \cdot ... \cdot x_k}{\cong} \text{ElGamalEnc}_{S_i}(b_1 \cdot b_2 \cdot ... \cdot b_k)$$

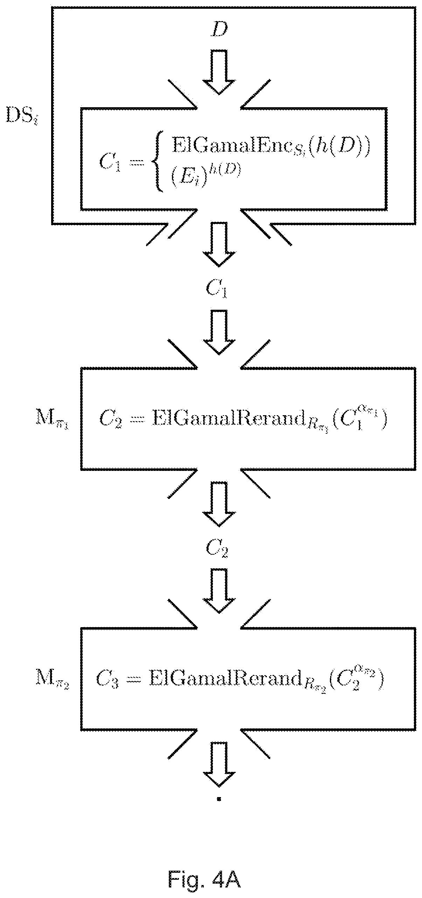

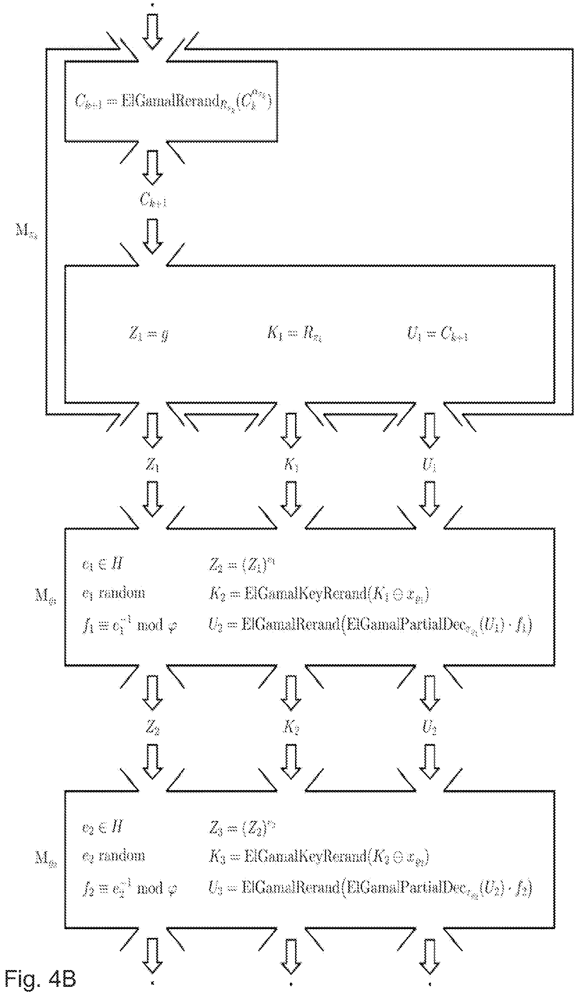

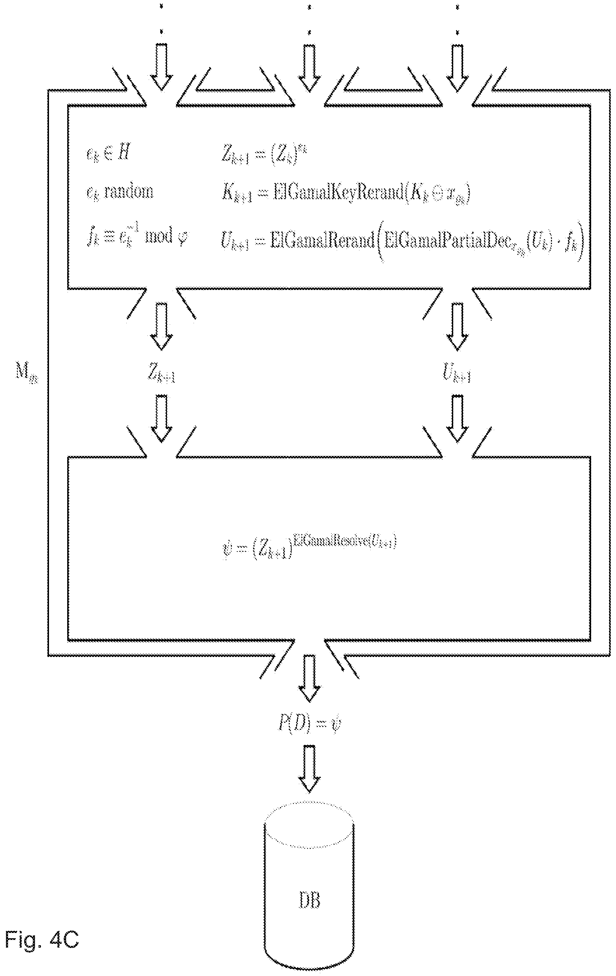

Pseudonymisation process (Figs. 4A, 4B and 4C)

Two alternatives are presented for defining the function adapted for mapping the entity identifiers to pseudonyms. For implementing the system, a decision must be made on which of the two alternatives will be utilized.

The pseudonym assigned by the system to the entity identifier D will hereinafter be denoted by P(D).

Pseudonymisation function, first alternative:

$$P(D) = g^{(h(D)^{\alpha_1 \cdot \alpha_2 \cdot ... \cdot \alpha_k} \bmod \varphi)}, \qquad\qquad (2.0.1)$$

where the range of the function h is a subset of the set H.

Pseudonymisation function, second alternative:

$$P(D) = g^{((b_1 \cdot b_2 \cdot ... \cdot b_k)^{h(D) \cdot \alpha_1 \cdot \alpha_2 \cdot ... \cdot \alpha_k} \bmod \varphi)} \qquad\qquad (2.0.2)$$

For pseudonymisation it is not necessary to utilize the ElGamal-type encryption system, because the pseudonym values are defined by the functions according to the above-described alternatives, and neither of the functions can be derived solely from the ElGamal-type encryption system. The mapping adapted for assigning pseudonyms to the entity identifiers is therefore basically not resulting from the ElGamal-type encryption system. In the course of the method described in the present invention, the mathematical operations required for calculating the formulas 2.0.1 and 2.0.2 (modular multiplication, modular exponentiation) are not obtained as a direct output of the ElGamal-type encryption system but rather due to the homomorphic properties of the ElGamal-type encryption system, i.e., thanks to the fact that the ElGamal-type encryption system is homomorphic with regard to exponentiation and to multiplication by a group element. The ElGamal-type encryption system is included in the invention not because it is required for generating the pseudonyms, but in order that the pseudonyms can be generated in a secure manner, i.e., without the participants of the process gaining any extra information during the interaction. The significance of the invention does not exclusively stem from the method being adapted for securely generating the pseudonyms, but first and foremost from the cryptographic strength of the pseudonyms themselves, including their resistance to exponent marking attacks.

Data submission step

In this step, one of the data sources (hereinafter: $DS_i$) initiates the pseudonymisation of an entity identifier D in its possession. This is performed in the following manner:

2.1.1 The data source $DS_i$ calculates an ElGamal cipher $C_1$ according to one of the following two alternatives:

2.1.1.1 In case the first alternative (2.0.1) of the pseudonymisation function is applied, the definition of the ElGamal cipher $C_1$ is:

$$C_1 = \mathrm{ElGamalEnc}_{S_i}(h(D))$$

2.1.1.2 In case the second alternative (2.0.2) of the pseudonymisation function is applied, the ElGamal cipher $C_1$ is defined as:

$$C_1 = (E_i)^{h(D)}$$

(see the section Exponentiation of an ElGamal cipher).

2.1.2 The data source $DS_i$ randomly chooses - preferably according to a uniform distribution - a value $\pi_1$ from among the numbers 1, 2, ..., k.
2.1.3 The data source $DS_i$ sends the cipher $C_1$ to the mapper $M_{\pi_1}$.

Randomization step

This step has two objectives:

-    To ensure that, if the entity identifier D or the cipher $C_1$ is manipulated (altered) by the data source $DS_i$ in the submission step (chosen plaintext or chosen ciphertext attack), the attacker is not able to gain such information that would enable it to find out or correctly guess the pseudonym corresponding to an identifier (with a probability higher than that of choosing randomly from the set of all pseudonyms).
-    To transform the cipher $C_1$ such that no entity (including the data source $DS_i$) is able to guess which data source is the originator of the cipher.

This step is performed by the mappers carrying out the following operations for each index j = 1, 2, ..., k in the following order:

2.2.1 The mapper $M_{\pi_j}$) checks if the first and second components of the ElGamal cipher $C_j$ are elements of the set H, and only continues the process if the result of the check is positive.

2.2.2 The mapper $M_{\pi_j}$ calculates the cipher $C_{j+1} = \mathrm{ElGamalRerand}_{R_{\pi_j}}\left((C_j)^{\alpha_{\pi_j}}\right).$

2.2.2. If j < k, then the mapper $M_{\pi_j}$) randomly selects - preferably according to a uniform distribution - from the numbers 1, 2, ..., k such a number $\pi_{j+1}$ that is not among the numbers $\pi_1, \pi_2, ..., \pi_j$, and then sends in a message the cipher $C_{j+1}$ to

the mapper $M_{\pi_{j+1}}$.

2.2.3. If, in turn, j = k, then the mapper $M_{\pi_j}$ randomly selects - preferably according to a uniform distribution - from the numbers 1,2, ..., k a number $\varrho_1$, and sends to the mapper $M_{\varrho_1}$ the following in a message:

$$Z_1 = g$$

$$K_1 = R_{\pi_k}$$

$$U_1 = C_{k+1}$$

The rerandomization step is thereby completed.

Pseudonym decryption step

In this step, the cipher $U_1$ is decrypted by the mappers such that the decrypted value itself is never known, only the result of exponentiating the generator element g utilizing this value as an exponent is published.

The following operations must be performed for each index j = 1, 2, ..., k, in this order:

2.3.1 The mapper $M_{\pi_j}$ checks if the first and second components of the ElGamal cipher $U_j$ are elements of the set H, and only continues the process if the result of the check is positive.

2.3.2 The mapper $M_{\pi_j}$ checks if the first and second components of the ElGamal public key $K_j$ are elements of the set H, and only continues the process if the result of the check is positive.

2.3.3 The mapper $M_{\varrho_j}$ randomly - preferably according to a uniform distribution - chooses an integer $e_j$ from the set H, and determines an integer $f_j$ such that:

$$e_j \cdot f_j \equiv 1 \mod \varphi$$

Such a value f can be found for example applying the Euclidean algorithm.

2.3.4 The mapper $M_{\varrho_j}$ calculates the following values:

$$Z_{j+1} = \left(Z_j\right)^{e_j}$$

$$K_{j+1} = \mathrm{ElGamalKeyRerand}\left(K_j \ominus x_{\varrho_j}\right)$$

$$U_{j+1} = \mathrm{ElGamalRerand}_{K_{j+1}}\left(\mathrm{ElGamalPartialDec}_{x_{\varrho_j}}\left(U_j\right) \cdot f_j\right)$$

(By the exponentiation of $Z_j$, in this case the group operation, i.e., exponentiation defined over G is meant.)

2.3.5. If j < k, then the mapper $M_{\varrho_j}$ randomly selects - preferably according to a uniform distribution - from the numbers 1, 2, ..., k such a number $\varrho_{j+1}$ that is not among the numbers $\varrho_1, \varrho_2, ..., \varrho_j$, and then sends in a message the value $Z_{j+1}$, the key $K_{j+1}$, and the cipher $U_{j+1}$ to the mapper $M_{\varrho_{j+1}}$.

2.3.6. If j = k, then the mapper $M_{\varrho_j}$ generates the following value:

$$\psi = \left(Z_{k+1}\right)^{\mathrm{ElGamalResolve}\left(U_{j+1}\right)}$$

(By the exponentiation of $Z_{k+1}$, in this case the group operation, i.e., exponentiation defined over G is meant.)

This value $\psi$ is the pseudonym corresponding to the identifier D.

Correctness of the pseudonym

In the following we sketch a proof for the value $\psi$ generated by the method presented in the previous section being equal to the value according to the appropriate definition (2.0.1 or 2.0.2) of *P*(D).

It can be easily seen that if K is a public key corresponding to the ElGamal private key x, m is an arbitrary integer, $\lambda$ is a positive integer, and C = ElGamalEnc$_K$(m), then the following equivalences hold:

$$\text{ElGamalRerand}_K(C) \overset{x}{\cong} C \qquad\qquad (3.1)$$

$$\text{ElGamalRerand}_{\text{ElGamalKeyRerand}(K)}(C) \overset{x}{\cong} C \qquad\qquad (3.2)$$

$$\text{ElGamalEnc}_K\big(m^\lambda\big) \overset{x}{\cong} C^\lambda \qquad\qquad (3.3)$$

$$\text{ElGamalEnc}_K(m \cdot \lambda) \overset{x}{\cong} C \cdot \lambda \qquad\qquad (3.4)$$

$$\text{ElGamalPartialDec}_t(C) \overset{x \cdot t^{-1} \bmod \varphi}{\cong} \text{ElGamalEnc}_{K \ominus t}(m) \qquad\qquad (3.5)$$

Applying the equivalences 3.1 and 3.3, from the steps 2.2.1, 2.2.2, and 2.2.3 it follows by induction that for each index j = 1,2, ..., k:

$$C_{j+1} \overset{x_1 \cdot x_2 \cdot \ldots \cdot x_k}{\cong} (C_1)^{\alpha_{\pi_1} \cdot \alpha_{\pi_2} \cdot \ldots \cdot \alpha_{\pi_j}} \qquad\qquad (3.6)$$

Specially:

$$C_{k+1} \overset{x_1 \cdot x_2 \cdot \ldots \cdot x_k}{\cong} (C_1)^{\alpha_{\pi_1} \cdot \alpha_{\pi_2} \cdot \ldots \cdot \alpha_{\pi_k}} = (C_1)^{\alpha_1 \cdot \alpha_2 \cdot \ldots \cdot \alpha_k} \qquad\qquad (3.7)$$

With the help of the properties 3.2, 3.4, and 3.5, based on the steps 2.3.2, 2.3.3, 2.3.4 it can be obtained by induction that for each index j = 1,2, ..., k:

$$U_{j+1} \overset{x_{\varrho_{j+1}} \cdot x_{\varrho_{j+2}} \cdot \ldots \cdot x_{\varrho_k}}{\cong} \text{ElGamalPartialDec}_{x_{\varrho_1} \cdot x_{\varrho_2} \cdot \ldots \cdot x_{\varrho_j}}(C_{k+1}) \cdot f_1 \cdot f_2 \cdot \ldots \cdot f_j \qquad\qquad (3.8)$$

Substituting equivalence 3.7 and considering the case j = k:

$$\text{ElGamalResolve}(U_{k+1}) = \text{ElGamalResolve}\big(\text{ElGamalPartialDec}_1(U_{k+1})\big) =$$

$$= \text{ElGamalResolve}\left(\text{ElGamalPartialDec}_{x_1 \cdot x_2 \cdot \ldots \cdot x_k}(C_1)\right)^{\alpha_1 \cdot \alpha_2 \cdot \ldots \cdot \alpha_k} \cdot f_1 \cdot f_2 \cdot \ldots$$

$$\cdot f_k$$

based on the definition of $Z_{j+1}$ it is obvious that:

$$Z_{k+1} = g^{e_1 \cdot e_2 \cdot \ldots \cdot e_k}$$

Applying the previous two equations and the Euler-Fermat theorem:

$$(Z_{k+1})^{\text{ElGamalResolve}(U_{k+1})}$$

$$= g^{\left(e_1 \cdot e_2 \cdot \ldots \cdot e_k \cdot f_1 \cdot f_2 \cdot \ldots \cdot f_k \cdot \text{ElGamalResolve}\left(\text{ElGamalPartialDec}_{x_1 \cdot x_2 \cdot \ldots \cdot x_k}(C_1)\right)^{\alpha_1 \cdot \alpha_2 \cdot \ldots \cdot \alpha_k}\right)} =$$

$$= g^{\left(\text{ElGamalResolve}\left(\text{ElGamalPartialDec}_{x_1 \cdot x_2 \cdot \ldots \cdot x_k}(C_1)\right)^{\alpha_1 \cdot \alpha_2 \cdot \ldots \cdot \alpha_k}\right)}$$

If the pseudonymisation function according to the equation 2.0.1 is being used, then $C_1 = \text{ElGamalEnc}_{S_i}(h(D))$, and thus ElGamalResolve (ElGamalPartialDec$_{x_1 \cdot x_2 \cdot \ldots \cdot x_k}(C_1)) = h(D)$, therefore $\psi = g^{(h(D)\alpha_1 \cdot \alpha_2 \cdot \ldots \cdot \alpha_k)} = P(D)$.

If, on the other hand, the pseudonymisation function has been defined according to the equation 2.0.2, then $C_1 = (E_i)^{h(D)}$, and therefore according to the equivalence 3.3 ElGamalResolve (ElGamalPartialDec$_{x_1 \cdot x_2 \cdot \ldots \cdot x_k}(C_1)) = (b_1 \cdot b_2 \cdot \ldots \cdot b_k)^{h(D)}$, thus $\psi = g^{\left((b_1 \cdot b_2 \cdot \ldots \cdot b_k)^{h(D) \cdot \alpha_1 \cdot \alpha_2 \cdot \ldots \cdot \alpha_k}\right)} = P(D)$ .

It therefore holds true that in both cases $\psi = P(D)$.

Additional information on attribute encryption

In the previous sections only the process of calculating the pseudonyms was described. In itself, this opens up few possibilities for data analysis. A preferred application of the present pseudonymisation method is that (with due care). various other data (entity attributes) can also be attached to the entity identifiers, these data accompanying the entity identifiers during the steps of the pseudonymisation process.

Preferably, in this case the entity attributes are also subjected to an encryption process, namely such that the entity attribute leaves the data source already in the form of a cipher, and this cipher is overwritten by the mappers in each step by a different respective cipher that, although different in each step, mathematically still carries the same message. This solution provides that an attacker (e.g., a data source with malicious intent) is not able to utilize the entity attributes for assigning the entity identifier, thereby cracking the anonymity provided by the method.

Entity attribute encryption process

The attribute encryption step added to the submission step is as follows:

4.1.1 The entity attribute A corresponding to the entity identifier D is encrypted by the data source DS$_i$ in the following manner:

$$A_{1,1} = \text{ElGamalEncrypt}_{S_i}(A)$$

4.1.2 After that, in addition to the cipher $C_1$, the data source DS$_i$ also sends the cipher $A_{1,1}$ in a message sent to the mapper M$_{\pi 1}$.

The attribute encryption step added to the rerandomization step is the following:

The following operations must be performed for each index j = 1, 2, ..., k:

4.2.1 After receiving the cipher $A_{1,j}$ attached to the cipher $C_j$, the mapper M$_{\pi j}$ checks if both components thereof are elements of the set H, and, if the result of the check is positive, it calculates the cipher $A_{1,j+1}$ in the following manner:

$$A_{1,j+1} = \text{ElGamalRerandomize}_{R_{\pi_j}}(A_{1,j})$$

4.2.2 If j < k, then, in addition to the cipher $C_{j+1}$, the mapper M$_{\pi j}$ also sends the cipher $A_{1,j+1}$ in a message sent to the mapper M$_{\pi j+1}$.

4.2.3 If, in turn, j = k, then, in addition to the values $Z_1$, $K_1$, $U_1$, the M$_{\pi j}$ also sends the cipher $A_{2,1} = A_{1,j+1}$ in a message sent to the mapper $M_{\varrho_1}$.

The attribute encryption step added to the pseudonym decryption step is the following:

The following operations must be performed for each index j = 1, 2, ..., k:

4.3.1 After receiving the cipher $A_{2,j}$ attached to the values $Z_j$, $K_j$, $U_j$, the mapper $M_{\varrho j}$ checks if both components thereof are elements of the set H, and, if the result of the check is positive, it calculates the cipher $A_{2,j+1}$ in the following manner:

$$A_{2,j+1} = \text{ElGamalRerandomize}_{R_{\varrho j}}\left(A_{2,j}\right)$$

4.3.2 If $j < k$, then the mapper $M_{\varrho j}$ also sends the cipher $A_{2,j+1}$ to the mapper $M_{\varrho j+1}$ in a message containing the value $Z_{j+1}$, the key $K_{j+1}$, and the cipher $U_{j+1}$.

4.3.3 The cipher $A_{2,k+1}$ is the final encrypted form of entity attribute A.

Decryption process of the encrypted entity attributes

The entity attributes A can only be decrypted with the consent of all mappers.

Let $\mu_1$, $\mu_2$, ..., $\mu_k$ be an arbitrary-order permutation of the numbers 1,2, ..., k.

The entity attribute is decrypted performing the following steps:

5.1.1 The mapper $M_{\mu 1}$ calculates the following value:

$$B_{\mu_1} = \text{ElGamalPartialDec}_{x_{\mu_1}}\left(A_{2,k+1}\right)$$

5.1.2 For each value $j = 1,2, ..., k$ the mapper $\mu_j$ calculates the following value:

$$B_{\mu_{j+1}} = \text{ElGamalPartialDec}_{x_{\mu_j}}\left(B_{\mu_j}\right)$$

The entity attribute A is then obtained as $A = \text{ElGamalResolve}(B_{\mu_{k+1}})$.

Note: Without knowing the private key $x_1 \cdot x_2 \cdot ... \cdot x_k$, the ciphers $A_{1,1}$, $A_{1,2}$, ..., $A_{1,k+1}$ and $A_{2,1}$, $A_{2,2}$, ..., $A_{2,k+1}$ are indistinguishable from integer pairs chosen independently of each other in a random manner even if the value of the attribute A is known. If the system operates correctly, the same number pair $A_{2,k+1}$ will never be generated twice. Therefore, the entity attributes cannot be utilized for a data marking attack.

Preferred applications complementing the pseudonymisation method

It is particularly preferable if, in the above-described system, the mappers do not process the messages in the order of their reception, but instead they apply a so-called "mix network" mentioned in the introduction. Furthermore, if, from a business aspect it is not important that the entity identifiers are mapped to the pseudonyms immediately after being submitted, an alternative version of the mix network can also be applied: the incoming messages are first put on a waiting list by all mappers, and, in each case when the size of its waiting list exceeds a certain predetermined limit (e.g. 100 messages), the mapper randomly chooses a message from the list, and, after forwarding it, it waits until the size of the list again exceeds the preset limit. This ensures that a relationship between the identifiers and the pseudonyms cannot be established even from the generation order of the pseudonyms. The greater the limit regarding the length of the waiting list, the more effective the temporal mixing of the messages, but also the more the mapping process is hindered. Therefore, it is expedient to choose such a limit value that balances these two effects.

There is a large number of options for choosing the type of the group G; two of these will be scrutinised below. One of the opportunities is that G is a so-called Schnorr group (see e.g., the corresponding Wikipedia article). This option makes the ElGamal encryption defined over the multiplicative group mod $\varphi$ more secure. According to the other suggested option, G is a group defined by a prime-order elliptic curve defined over a finite field (see the Wikipedia article "Elliptic-curve cryptography"). In this case, the exponentiation operation over G is defined as the multiplication by a scalar of the elliptic point (i.e., the repeated addition of the elliptic point). It is important that the order of the group G is high enough (i.e., an order ensuring that the key size of ElGamal encryption over the multiplicative group mod $\varphi$ is secure).

The are multiple options for the exact selection of the group G. It is not recommended to choose a predetermined, known group, because, according to recent research, certain "preprocessing" attacks may offer significant help in cracking one of the cryptographic problems forming the basis of the present invention, namely the sqDDH problem (see the article by Henry Corrigan-Gibbs and Dmitry Kogan entitled "The Discrete-Logarithm Problem with Preprocessing", DOI: 10.1007/978-3-319-78375-8_14).

The algebraic group G and the generator element g are preferably predetermined by the entity or entities responsible for the implementation or the operation of the system. Optionally, they can also be predetermined in a decentralised manner by the mappers, expediently according to some type of commitment scheme (see e.g., the Wikipedia article "Commitment scheme"). This, for example, can be performed by applying such a deterministic pseudorandom number generator for generating the group G that has the number $N_1 \oplus N_2 \oplus ... \oplus N_k$ as its seed (starting value), where for each index j the integer $N_j$ is selected randomly from a sufficiently large interval by the mapper $M_j$, and the symbol $\oplus$ denotes a bitwise XOR operation. Each mapper reveals its own $N_j$ value only after publishing a value $F(N_j)$ ("commitment") calculated therefrom by a predetermined cryptographic hash function F, and after ensuring that every other mapper has also done so. Thereafter, based on the commitment values, each mapper is able to make sure that there has been no such manipulation which could affect the random nature of the value $N_1 \oplus N_2 \oplus ... \oplus N_k$.

It is strongly recommended to choose the set H such that it forms a Schnorr group with regard to modulo $\varphi$ multiplication. Otherwise, a maliciously acting mapper could choose a small integer (e.g., on the order of a million) x that is a submultiple of $\varphi$, and participate in the process utilizing the value $\alpha_j = \dfrac{\varphi}{x}$. Thereby, the range of the pseudonymisation function P could be significantly reduced (in both the first and second alternatives), to the extent that the malicious actor could even reproduce the function P applying a brute force attack, and then use it for cracking pseudonyms. Such an attack cannot be executed in case the set H is a Schnorr group, because in that case $\varphi$ is a prime, so there does not exist a suitable x value (the attacker cannot succeed either in case it chooses x = 1 or x = $\varphi$). It can be relatively easily provided that both the set H and the group G form a Schnorr group; a possible exemplary implementation is the following:

1. A prime number q is chosen randomly (preferably according to a uniform distribution, for example applying the Miller-Rabin prime test), of which prime number the binary representation consists of B bits.
2. Such an integer r is searched for between 2 and B for which it holds true that p = r · q + 1 is prime (for example it is checked applying the Miller-Rabin prime test). If there is no such number r, we return to step 1.
3. Such an integer s is searched for between 2 and B for which it holds true that N = s · p + 1 is prime. If there is no such number s, we return to step 1.
4. Integer numbers are randomly chosen (preferably according to a uniform distribution) between 2 and (p - 1) until such a number f is found that f is relatively prime to p, and $f^s \not\equiv 1 \bmod N$.
5. The generator element g is defined by the value $f^s \bmod N$, the group G being defined as a group of reduced residue classes a over modulo N for which it holds true that $a^s \not\equiv 1 \bmod N$ and $a^p \equiv 1 \bmod N$.
6. The set H is defined as a set of integers a between 1 and p that are relatively prime to p, while $a^r \not\equiv 1 \bmod P$ and $a^q = 1 \bmod p$.

In this case, random selection from the set H can be implemented easily, e.g., by applying the Monte Carlo method (see the Wikipedia article "Monte Carlo method").

Data sources may optionally also fulfil a mapping role. This further improves the security of the system, as it ensures that the other mappers cannot generate the open entity identifier even if all of them maliciously collude.

Optionally, multiple entity attributes can even be submitted simultaneously, attached to the same entity identifier. In that case, the entity attributes must be encrypted parallelly with each other and with the entity identifier. It must be made sure that an attacker is not able to perform data marking by submitting an unusually large number of entity attributes simultaneously with an entity identifier. It is recommended to restrict the number of entity attributes that can be submitted simultaneously.

As a special case, in the above-described process the case A = D may also occur; in other words, the submitted entity attribute may be identical to the entity identifier. This can be useful in case the field of application requires that the entity identifiers are decrypted from time to time, for example in the case of providing fraud prevention and fraud discovery services, because the pseudonymisation process is not reversible (not even by the consent of all mappers).

A typical, exemplary application and implementation

In the following, a possible mode of application of the invention will be described. One of the unsolved problems related to the operation of commercial plasma collectors is that the companies are unable to credibly establish that a given donor has not exceeded the maximum allowed number of plasma donations (in Hungary, this number is 45). This is because a donor may apply at two different companies and donate plasma 40 times at each company. This fraud can be discovered only if the plasma companies share data between them. However, sharing the donors' personal data is ethically reprehensible (and is also against the law).

The present invention can be applied for discovering this kind of fraud in the following manner:

- the data sources $DS_i$ are the plasma companies participating in the fraud discovery program,
- the entity identifiers D are the social security numbers of the donors registered with the participating plasma companies,
- the entity attributes A are also the social security numbers of the donors registered with the participating plasma companies,
- the mappers $M_j$ are entities that cooperate with or are independent from the participating plasma companies (each plasma company may operate an own mapper $M_j$ if it desires so, thereby ensuring that the entity identifiers D submitted by it cannot be decrypted even in the case of the malicious collusion of all the other plasma companies),
- applying the above-described method, the mappers $M_j$ calculate the pseudonyms P and the encrypted entity attributes $A_{2,k+1}$ corresponding thereto,
- if a pseudonym P has more occurrences in the database containing pseudonymised data than what is allowed (e.g. >45), the encrypted entity attribute $A_{2,k+1}$ is decrypted by the mappers $M_j$ by mutual agreement, thereby obtaining the entity identifier D of the fraudulent donor.

Conclusion

Therefore, the following data conversion is performed by the invention in order to ensure that even a collusion between all of the data sources and all but one of the mappers is not sufficient to allow for deciphering the relationship between the pseudonym P(D) and the entity identifier D:

- from data that are available at data sources $DS_i$ and that are suitable for identifying persons, things, or other entities by a characteristic name, i.e., from the entity identifier D,
- such pseudonymised data are produced in which each entity identifier D is replaced by a respective pseudonym P assigned thereto in a one-to-one manner (independent of the value of the cryptographic keys utilized by the data source $DS_i$),

such that

- the data sources $DS_i$ generate the cipher $C_1$ from the entity identifiers D in their possession,
- these ciphers are mapped into respective pseudonyms by a plurality of encryption means called mappers $M_j$, the mapping being performed by the mappers $M_j$ in a centralized system or in a decentralized (peer-to-peer, e.g., blockchain) network applying their respective own unique cryptographic keys $b_j$ or mapping cryptographic keys $\alpha_j$ executing their own operation in an arbitrary order,

such that

- the mappers calculate from each cipher the value $P(D) = g^{(h(D)^{\alpha_1 \cdot \alpha_2 \cdot \ldots \cdot \alpha_k} \mod \varphi)}$ or the value

$$P(D) = g^{((b_1 \cdot b_2 \cdot \ldots \cdot b_k)^{h(D) \cdot \alpha_1 \cdot \alpha_2 \cdot \ldots \cdot \alpha_k} \mod \varphi)}$$ in a secure manner, where g is the generator element of the group G utilized for encryption, $\varphi$ is the order (number of elements) of the group G, and h is a predetermined function (e.g. a cryptographic hash function) mapping integers to integers,
- this modular exponentiation, or a deterministic function thereof (e.g., applying a cryptographic hash function) will be treated as the pseudonym of the entity.

The computer system implementing the functionalities according to the invention is adapted for generating pseudonymised data related to entities, and comprises

- databases $DBI_i$ containing the entity-related data that are owned by the data sources $DS_i$, wherein the data are identified applying the entity identifiers D of the entities,
- a database DBP containing pseudonymised data, wherein the pseudonymised data are identified by pseudonyms P assigned to the respective entity identifiers D applying a one-to-one mapping,
- more than one (a number k of) mappers $M_j$,
- optionally, a key manager KM, and
- modules implementing the above-described functions and/or entities, which modules can be hardware, software, or combined hardware-software modules.

Another aspect of the invention is a computer program comprising instructions which, when the program is executed by a computer, cause the computer to carry out the steps of the method according to the invention. The invention further relates to a computer-readable medium adapted for storing the above-mentioned computer program.

In an embodiment the random selections are performed according to a uniform distribution.

In an embodiment the mapping h adapted for assigning an integer value to each entity identifier D is a cryptographic hash function that is defined over the space of entity identifiers D and maps to an interval $[0, \varphi]$.

In an embodiment the algebraic group G is a Schnorr group.

In an embodiment the algebraic group G is a prime-order elliptic curve defined over a finite field.

In an embodiment the set H forms a Schnorr group with regard to modulo $\varphi$ multiplication.

In an embodiment the data sources $DS_i$ share the ElGamal ciphers $C_1$ with the mappers $M_j$ by writing them into a database that operates according to a protocol verified by third parties and provides decentralized authenticity.

In an embodiment a blockchain database is applied as the database providing decentralized authenticity.

In an embodiment the mappers $M_j$ constitute a decentralized network and communicate with each other over encrypted channels.

In an embodiment the mappers $M_j$ do not immediately send the messages containing the ElGamal ciphers $C_{j+1}$, values $Z_{j+1}$, keys $K_{j+1}$, and ciphers $U_{j+1}$ generated by them to the respective subsequent mapper, but instead put them on a waiting list, and, when the size of the waiting list has exceeded a predetermined limit, they send the messages in a random order.

In an embodiment the mappers $M_j$ do not immediately send the messages containing the ElGamal ciphers $C_{j+1}$, values $Z_{j+1}$, keys $K_{j+1}$ and ciphers $U_{j+1}$ generated by them to the respective subsequent mapper, but instead send these messages after a randomly chosen time period has elapsed.

In an embodiment the mappers $M_j$ do not immediately process the received messages containing ElGamal ciphers $C_{j+1}$, values $Z_{j+1}$, keys $K_{j+1}$, and ciphers $U_{j+1}$, but instead put them on a waiting list and, after the size of the waiting list has exceeded a predetermined limit, they randomly choose a message from among the received messages and perform the subsequent mapping step on it.

In an embodiment the mappers $M_j$ do not immediately process the received messages containing ElGamal ciphers $C_{j+1}$, values $Z_{j+1}$, keys $K_{j+1}$, and ciphers $U_{j+1}$, but instead they carry out on each message to the subsequent mapping step after a respective randomly chosen time period has elapsed.

In an embodiment each ElGamal cipher $C_{j+1}$, value $Z_{j+1}$, key $K_{j+1}$, and cipher $U_{j+1}$ is shared by writing into a database providing decentralized authenticity.

In an embodiment a blockchain database is applied as the database providing decentralized authenticity.

In an embodiment the algebraic group G, the generator element g, and the set H are predetermined by the entity or entities responsible for the implementation or the operation of the system.

In an embodiment the algebraic group G, the generator element g, and the set H are predetermined by the mappers $M_j$ in a decentralized manner.

The invention can also be applied for all other purposes for which the technical solution described in the document WO 2021/009528 A1 can be applied.

**Claims**

1. A cryptographic pseudonym mapping method for an anonymous data sharing system, the method being adapted for generating pseudonymised data from entity data originating from data sources ($DS_i$), wherein the data are identified at the data sources ($DS_i$) by entity identifiers (D) of the respective entities, and wherein the pseudonymised data are identified by pseudonyms (P) assigned to the respective entity identifiers (D) applying a one-to-one mapping,

   **characterised by** applying, for a number n of data sources ($DS_i$)

   - more than one, a number k of mappers ($M_j$),
   - with an algebraic group (G) having an order $\varphi$, and within that, a generator element (g) of the algebraic group (G) being predetermined with respect to the mappers ($M_j$) and data sources ($DS_i$), and with a set (H) being also predetermined, said set (H) being a subset of integers being coprime to $\varphi$ that forms an algebraic group with regard to modulo $\varphi$ multiplication, furthermore, a mapping (h) assigning an integer value to each entity identifier (D) with respect to the mappers ($M_j$) and data sources ($DS_i$) being also predetermined, and
   - for each index j = 1, 2, ..., k:

      i. the actual mapper ($M_j$) selecting for itself, in a random manner, an integer $x_j$ and an integer $\alpha_j$,
      ii. the actual mapper ($M_j$) selecting an integer $b_j$ from the set (H) in a random manner,
      wherein $b_j$, $x_j$, and $\alpha_j$ are kept secret by the mapper ($M_j$),

- for each index j = 1, 2, ..., k the actual mapper ($M_j$) generating, cooperating with the other mappers ($M_j$), a first ElGamal public key ($R_j$) that corresponds to private key $x_1 \cdot x_2 \cdot ... \cdot x_k$, and storing the generated first ElGamal public key ($R_j$) by the actual mapper ($M_j$), wherein an ElGamal public key is a pair of numbers both being integers that are relatively prime to $\varphi$ and both called components of the ElGamal public key,

- for each index i = 1, 2, ..., n the actual data source ($DS_i$) generating, in cooperation with the mappers ($M_j$), a second ElGamal public key ($S_i$) that corresponds to the private key $x_1 \cdot x_2 \cdot ... \cdot x_k$, and storing the generated second ElGamal public key ($S_i$) by the actual data source ($DS_i$),
and,

- in the course of the pseudonymisation of an entity identifier (D) by a data source ($DS_i$), the data source ($DS_i$)

  i. calculating an ElGamal cipher ($C_1$) being a pair of numbers both being integers that are relatively prime to $\varphi$ and both called components of the ElGamal cipher, by applying one of the following two alternatives:

$$C_1 = \mathrm{ElGamalEnc}_{S_i}(h(D))$$

  or

$$C_1 = (E_i)^{h(D)},$$

  wherein, in the case of the first alternative, ElGamalEnc denotes ElGamal encryption and the range of the function h is a subset of the set (H), and in the case of the second alternative, for each index i = 1, 2, ..., n the actual data source ($DS_i$) generates, in cooperation with the mappers ($M_j$), such an ElGamal cipher ($E_i$) of the value $b_1 \cdot b_2 \cdot ... \cdot b_k$ that can be decrypted utilizing the ElGamal private key $x_1 \cdot x_2 \cdot ... \cdot x_k$:

$$\mathrm{ElGamalResolve}\left(\mathrm{ElGamalPartialDec}_{x_1 \cdot x_2 \cdot ... \cdot x_k}(E_i)\right)$$

$$\equiv b_1 \cdot b_2 \cdot ... \cdot b_k \bmod \varphi$$

  wherein ElGamalPartialDec denotes partial decryption of an ElGamal cipher and ElGamalResolve denotes resolving an ElGamal cipher,
  ii. selecting a number $\pi_1$ from the numbers 1, 2, ..., k in a random manner, and
  iii. sending the ElGamal cipher ($C_1$) to the mapper ($M_{\pi_1}$) that corresponds to the number $\pi_1$,

- for each ElGamal cipher ($C_1$) received in the system, the mappers ($M_j$) carrying out the following operations for each index j = 1, 2, ..., k in the following order:

  i. the actual mapper ($M_{\pi_j}$) checks if both components of the ElGamal cipher $C_j$ are elements of the set (H), and continues the process only in case the result of the check is positive,
  ii. the actual mapper ($M_{\pi_j}$) calculates the subsequent ElGamal cipher ($C_{j+1}$):

$$C_{j+1} = \mathrm{ElGamalRerand}_{R_{\pi_j}}\left((C_j)^{\alpha_{\pi_j}}\right),$$

  wherein ElGamalRerand denotes rerandomization of an ElGamal cipher,
  iii. if j < k, then the actual mapper ($M_{\pi_j}$) randomly selects from the numbers 1, 2, ..., k such a number $\pi_{j+1}$ that is not among the numbers $\pi_1, \pi_2, ..., \pi_j$, and then sends in a message the subsequent ElGamal cipher ($C_{j+1}$) to the mapper ($M_{\pi_{j+1}}$) corresponding to the number $\pi_{j+1}$,
  iv. if j = k, then the actual mapper ($M_{\pi_j}$) randomly chooses a number $\varrho_1$ from the numbers 1, 2, ..., k, and sends in a message to the mapper ($M_{\varrho_1}$) corresponding to the number $\varrho_1$ the following information:

$$Z_1 = g$$

$$K_1 = R_{\pi_k}$$

$$U_1 = C_{k+1}$$

- thereafter the mappers ($M_{\varrho_j}$) carrying out, for each index j = 1,2, ..., k, in this order, the following operations:

i. the actual mapper ($M_{\varrho_j}$) checks if both components of the ElGamal cipher $U_j$ are elements of the set (H), and continues the process only in case the result of the check is positive,

ii. the actual mapper ($M_{\varrho_j}$) checks if both components of the ElGamal public key $K_j$ are elements of the set (H), and continues the process only in case the result of the check is positive,

iii. the actual mapper ($M_{\varrho_j}$) randomly chooses an integer from the set (H) and determines an integer $f_j$ such that: $e_j \cdot f_j \equiv 1 \bmod \varphi$

iv. the actual mapper ($M_{\varrho_j}$) calculates the followings:

a value ($Z_{j+1}$): $Z_{j+1} = (Z_j)^{e_j}$,

a key ($K_{j+1}$): $K_{j+1} = $ ElGamalKeyRerand ($K_j \ominus {}^X\varrho_j$), and
a cipher

$$(U_{j+1}): U_{j+1} = \text{ElGamalRerand}_{K_{j+1}} \left( \text{ElGamalPartialDec}_{x_{\varrho_j}} (U_j) \cdot f_j \right),$$

wherein ElGamalKeyRerand denotes rerandomization of an ElGamal key,

v. if j < k, then the actual mapper ($M_{\varrho_j}$) randomly chooses from the numbers 1,2, ..., k such a number $\varrho_{j+1}$ that is not among the numbers $\varrho_1, \varrho_2, ..., \varrho_j$, and then sends in a message to the mapper ($M_{\varrho_{j+1}}$) corresponding to the chosen number $\varrho_{j+1}$ the value ($Z_{j+1}$), the key ($K_{j+1}$) and the cipher ($U_{j+1}$) generated in the previous step,

vi. and, if j = k, then the actual mapper ($M_{\varrho_j}$) generates the pseudonym (P) corresponding to the entity identifier (D):

$$P = (Z_{k+1})^{\text{ElGamalResolve}(U_{j+1})}$$

2.  The method according to claim 1, **characterised in that**, in the course of generating the first ElGamal public keys ($R_j$),

- for each index j = 1, 2, ..., k:

vii. the actual mapper ($M_j$) randomly chooses an integer $r_j$ from the set (H),
viii. the actual mapper ($M_j$) randomly chooses an integer number $t_j$,
ix. utilizing the chosen number $t_j$, the actual mapper ($M_j$) generates an ElGamal public key ($K_{j,1}$) corresponding thereto: $K_{j,1} = (r_j, (r_j)^{t_j} \bmod \varphi)$,
x. if j > 1, then the actual mapper ($M_j$) sends to the first mapper ($M_1$) the ElGamal public key ($K_{j,1}$) corresponding to the chosen number $t_j$,
xi. for each index $\tau$ = 1, 2, ..., k, in this order, the actual mapper ($M_\tau$) checks if both components of the actual ElGamal public key ($K_{j,\tau}$) are elements of the set (H), and, if the result of the check is positive, it calculates therefrom the subsequent ElGamal public key ($K_{j,\tau+1}$): $K_{j,\tau+1} = $ ElGamalKeyRerand($K_{j,\tau} \oplus x_\tau$), and if $\tau$ < k, sends it to the subsequent mapper ($M_{\tau+1}$),
xii. the last mapper ($M_k$) sends to the actual mapper ($M_j$) the subsequent ElGamal public key ($K_{j,k+1}$), and

xiii. the actual mapper ($M_j$) generates and stores the first ElGamal public key ($R_j$): $R_j = K_{j,k+1} \ominus t_j$.

3. The method according to claims 1 or 2, **characterised in that**, in the course of generating the second ElGamal public keys ($S_i$),

- for each index i = 1, 2, ..., n:

i. the actual data source ($DS_i$) randomly chooses an integer number $s_i$ from the set (H),
ii. the actual data source ($DS_i$) randomly chooses an integer number $u_i$
iii. the actual data source ($DS_i$) generates the ElGamal public key ($L_{i,1}$) that corresponds to the chosen numbers: $L_{i,1} = (s_i, (s_i)^{u_i} \bmod \varphi)$,
iv. the actual data source ($DS_i$) sends to the first mapper ($M_1$) the ElGamal public key ($L_{i,1}$) that corresponds to the chosen numbers,
v. for each index $\tau$ = 1, 2, ..., k, in this order, the actual mapper ($M_\tau$) checks if both components of the received ElGamal public key ($L_{i,\tau}$) are elements of the set (H), and, if the result of the check is positive, it calculates the subsequent ElGamal public key ($L_{i,\tau+1}$): $L_{i,\tau+1} = \text{ElGamalKeyRerand}(L_{i,\tau} \oplus x_\tau)$, and if $\tau$ < k, sends it to the subsequent mapper ($M_{\tau+1}$),
vi. the last mapper ($M_k$) sends to the actual data source ($DS_i$) the subsequent ElGamal public key ($L_{i,k+1}$), and
vii. the actual data source ($DS_i$) generates and stores the second ElGamal public key ($S_i$): $S_i = L_{i,k+1} \ominus u_i$.

4. The method according to any of claims 1-3, **characterised in that** the ElGamal ciphers ($E_i$) adapted for being decrypted utilizing the ElGamal private key are generated as follows:

- For each index i = 1, 2, ..., n:

i. the data source ($DS_i$) randomly chooses a value $\gamma_{i,0}$ from the set (H).
ii. the data source ($DS_i$) generates the cipher ($\gamma_{i,1}$) corresponding to the chosen value: $\gamma_{i,1} = \text{ElGamalEnc}_{S_i}(\gamma_{i,0})$,
iii. the data source ($DS_i$) sends the cipher ($\gamma_{i,1}$) to the first mapper ($M_1$),
iv. for each index j = 1, 2, ..., k, in this order, the actual mapper ($M_j$) checks if both components of the actual ElGamal cipher ($\gamma_{i,j}$) are elements of the set (H), and, if the result of the check is positive, it calculates the subsequent cipher ($\gamma_{i,j+1}$): $\gamma_{i,j+1} = \text{ElGamalRerand}_{R_j}(\gamma_{i,j}) \cdot b_j$, and if j < k, it sends the calculated cipher ($\gamma_{i,j+1}$) to the subsequent mapper ($M_{j+1}$),
v. the last mapper ($M_k$) sends the calculated cipher ($\gamma_{i,k+1}$) it has received to the data source ($DS_i$), and
vi. the data source ($DS_i$) generates and stores the ElGamal cipher ($E_i$): $E_i = \gamma_{i,k+1} \cdot ((\gamma_{i,0})^{-1} \bmod \varphi)$.

5. The method according to any of claims 1 to 4, **characterised in that**:

- for calculating the ElGamal cipher ($C_1$), the first alternative is applied by all data sources ($DS_i$) for each entity identifier (D): $C_1 = \text{ElGamalEnc}_{S_i}(h(D))$, where the range of the function h is a subset of the set (H), or
- for calculating the ElGamal cipher ($C_1$), the second alternative is applied by all data sources ($DS_i$) for each entity identifier (D): $C_1 = (E_i)^{h(D)}$.

6. The method according to any of claims 1 to 5, **characterised in that** the algebraic group (G), the generator element (g), and the set (H) are predetermined by the following algorithm:

i. choosing randomly, according to a uniform distribution, a prime number q, the binary representation of which consists of B bits,
ii. searching for an integer r between 2 and B for which it holds true that $p = r \cdot q + 1$ is prime; if no such r can be found, returning to step i,
iii. searching for an integer s between 2 and B for which it holds true that $N = s \cdot p + 1$ is prime; if no such s can be found, returning to step i,
iv. choosing randomly, according to a uniform distribution, integer numbers between 2 and (p - 1) until such a number f is found that f is relatively prime to p, and $f^s \not\equiv 1 \bmod N$,
v. defining the generator element g as the value $f^s \bmod N$, and defining the group G as a group of reduced residue classes a over modulo N for which it holds true that $a^s \not\equiv 1 \bmod N$ and $a^p \equiv 1 \bmod N$,
vi. defining the set (H) as a set of integers a between 1 and p where a is relatively prime to p, $a^r \not\equiv 1 \bmod P$, and $a^q \equiv 1$

mod p.

7. The method according to claim 6, **characterised in that** a pseudorandom number generator determined in the following manner is applied in the algorithm utilized for defining the algebraic group (G), the generator element (g), and the set (H):

- each mapper ($M_j$) chooses an integer $N_j$ from a predetermined range,
- each mapper ($M_j$) publishes a commitment value $F(N_j)$, where F is a cryptographic hash function,
- each mapper ($M_j$) waits until all of the values $F(N_j)$ are published,
- each mapper ($M_j$) publishes its own $N_j$ value,
- the mappers ($M_j$) calculate the value $N_1 \oplus N_2 \oplus ... \oplus N_k$, where the symbol $\oplus$ denotes a bitwise XOR operation,
- the value $N_1 \oplus N_2 \oplus ... \oplus N_k$ is applied as the seed of the pseudorandom number generator utilized for defining the algebraic group (G), the generator element (g), and the set (H).

8. The method according to any of claims 1 to 7, **characterised in that** one or more attributes (A) belong to each entity identifier (D), which attribute/attributes is/are attached in unencrypted form to the ElGamal cipher ($C_1$) calculated as an encrypted entity identifier, to the value calculated in the course of pseudonym calculation, and to the calculated pseudonyms (P), followed by matching and/or collecting the attributes (A) based on the pseudonyms (P).

9. The method according to any of claims 1 to 7, **characterised in that** one or more attributes (A) belong to each entity identifier (D), which attribute/attributes is/are attached by the data source ($DS_i$) in encrypted form to the ElGamal cipher ($C_1$) calculated as an encrypted entity identifier,
such that

- the attribute (A) corresponding to the entity identifier (D) is encrypted by the data source ($DS_i$) in the following manner:

$$A_{1,1} = \text{ElGamalEncrypt}_{S_i}(A)$$

- then, in addition to the ElGamal cipher ($C_1$), the encrypted attribute ($A_{1,1}$) is also sent by the data source ($DS_i$) to the mapper ($M_{\pi_1}$) in a message,
- for each index j = 1, 2, ..., k:

i. after receiving the encrypted attribute ($A_{1,1}$) attached to an ElGamal cipher ($C_1$), the actual mapper ($M_{\pi_j}$) checks if both components thereof originate from the set (H), and, if the result of the check is positive, it calculates the subsequent value ($A_{1,j+1}$) of the encrypted attribute in the following manner:

$$A_{1,j+1} = \text{ElGamalRerandomize}_{R_{\pi_j}}(A_{1,j})$$

ii. if j < k, then, in addition to the subsequent ElGamal cipher ($C_{j+1}$), the actual mapper ($M_{\pi_j}$) also sends the subsequent value ($A_{1,j+1}$) of the encrypted attribute in a message sent to the subsequent mapper ($M_{\pi_{j+1}}$),
iii. if j = k, then, in addition to the values $Z_1$, $K_1$, $U_1$, the actual mapper ($M_{\pi_j}$) sends in a message sent to the mapper ($M_{\varrho_1}$) corresponding to the number $\varrho_1$ a value $A_{2,1} = A_{1,j+1}$ that is calculated as the subsequent value of the encrypted attribute and which corresponds to the first encrypted attribute value ($A_{2,1}$) of the subsequent order of mappers, and then

- for each index j = 1, 2, ..., k:

i. if both components of the encrypted attribute value ($A_{2,j}$) are elements of the set (H), then the actual mapper ($M_{\varrho_j}$) calculates therefrom the subsequent value of the encrypted attribute ($A_{2,j+1}$) in the following manner:

$$A_{2,j+1} = \text{ElGamalRerandomize}_{R_{\varrho_j}}(A_{2,j})$$

ii. if j < k, then the actual mapper ($M_{\varrho j}$) also sends the subsequent value ($A_{2,j+1}$) of the encrypted attribute to the subsequent mapper ($M_{\varrho j+1}$) in a message containing the value ($Z_{j+1}$), key ($K_{j+1}$), and cipher ($U_{j+1}$),

iii. the final encrypted form ($A_{2,k+1}$) of the entity attribute is finally obtained.

10. A computer system implementing the method according to any of claims 1 to 9, the system comprising

- data sources ($DS_i$) containing data related to entities,
- more than one, a number k of mappers ($M_j$),
- a module adapted for generating cryptographic keys of the data sources,
- a module adapted for storing the cryptographic keys of the data sources,
- a module adapted for generating cryptographic keys of the mappers,
- a module adapted for storing the cryptographic keys of the mappers,
- a module adapted for encrypting the entity identifiers (D), and
- a module adapted for mapping the encrypted entity identifiers ($C_1$) to the pseudonyms (P).

11. The computer system according to claim 10, **characterised by** further comprising

- databases ($DBI_i$) stored at the data sources ($DS_i$), in which the data are identified applying the entity identifiers (D) of the entities, and
- a database (DBP) containing pseudonymised data, in which the pseudonymised data are identified by pseudonyms (P) assigned to the respective entity identifiers (D) applying a one-to-one mapping,

12. The computer system according to claim 10 or 11, **characterised by** the system further comprising

- data streams ($SI_i$) broadcast by the data sources ($DS_i$), wherein the data are identified by the entity identifiers (D) of the entities, and
- a data stream (SP) containing pseudonymised data, wherein the pseudonymised data are identified by pseudonyms (P) assigned to the respective entity identifiers (D) applying a one-to-one mapping.

13. The computer system according to any of claims 10 to 12, **characterised by** further comprising

- a key manager adapted for storing and/or generating the cryptographic keys of the data sources ($DS_i$), and
- a key manager adapted for storing and/or generating the cryptographic keys of the mappers ($M_j$).

14. A computer program comprising instructions which, when the program is executed by a computer, cause the computer to carry out the steps of any of the methods according to any of claims 1-9.

15. A computer-readable medium adapted for storing the computer program according to claim 14.

**Patentansprüche**

1. Verfahren zur kryptografischen Pseudonymzuordnung für ein anonymes Datenaustauschsystem, wobei das Verfahren zur Erzeugung pseudonymisierter Daten aus von Datenquellen ($DS_i$) stammenden Entitätsdaten eingerichtet ist, wobei die Daten bei den Datenquellen ($DS_i$) durch Entitätskennungen (D) der jeweiligen Entitäten identifiziert werden und wobei die pseudonymisierten Daten durch Pseudonyme (P) identifiziert werden, die den jeweiligen Entitätskennungen (D) unter Anwendung einer Eins-zu-eins-Zuordnung zugeordnet sind, **dadurch gekennzeichnet, dass** für eine Anzahl n von Datenquellen ($DS_i$) Folgendes angewendet wird:

- mehr als ein Mapper, nämlich eine Anzahl k von Mappern ($M_j$),
- wobei eine algebraische Gruppe (G) mit einer Ordnung φ und darin ein Erzeugerelement (g) der algebraischen Gruppe (G) in Bezug auf die Mapper ($M_j$) und Datenquellen ($DS_i$) vorbestimmt ist, und wobei ferner eine Menge (H) vorbestimmt ist, wobei diese Menge (H) eine Teilmenge von zu φ teilerfremden ganzen Zahlen ist, die hinsichtlich der Multiplikation Modulo φ eine algebraische Gruppe bildet, ferner ist eine Abbildung (h) vorbestimmt, die jeder Entitätskennung (D) in Bezug auf die Mapper ($M_j$) und Datenquellen ($DS_i$) einen ganzzahligen Wert zuordnet, und

- für jeden Index j = 1, 2, ..., k:

  i. wählt der jeweilige Mapper ($M_j$) für sich selbst auf zufällige Weise eine ganze Zahl $x_j$ und eine ganze Zahl $\alpha_j$,
  ii. wählt der jeweilige Mapper ($M_j$) aus der Menge (H) auf zufällige Weise eine ganze Zahl $b_j$,

wobei $b_j$, $x_j$ und $\alpha_j$ vom Mapper ($M_j$) geheim gehalten werden,
- für jeden Index j = 1, 2, ..., k erzeugt der jeweilige Mapper ($M_j$) in Zusammenarbeit mit den anderen Mappern ($M_j$) einen ersten ElGamal-öffentlichen Schlüssel ($R_j$), der dem privaten Schlüssel $x_1 \cdot x_2 \cdot ... \cdot x_k$ entspricht, und speichert den erzeugten ersten ElGamal-öffentlichen Schlüssel ($R_j$), wobei ein ElGamal-öffentlicher Schlüssel ein Zahlenpaar ist, dessen beide Zahlen ganze Zahlen sind, die zu $\varphi$ teilerfremd sind, und beide als Komponenten des ElGamal-öffentlichen Schlüssels bezeichnet werden,
- für jeden Index i = 1, 2, ..., n erzeugt die jeweilige Datenquelle ($DS_i$) in Zusammenarbeit mit den Mappern ($M_j$) einen zweiten ElGamal-öffentlichen Schlüssel ($S_i$), der dem privaten Schlüssel $x_1 \cdot x_2 \cdot ... \cdot x_k$ entspricht, und speichert den erzeugten zweiten ElGamal-öffentlichen Schlüssel ($S_i$),
und
- im Verlauf der Pseudonymisierung einer Entitätskennung (D) durch eine Datenquelle ($DS_i$) führt die Datenquelle ($DS_i$) Folgendes aus:

  i. Berechnen einer ElGamal-Chiffre ($C_1$), die ein Zahlenpaar ist, dessen beide Zahlen ganze Zahlen sind, die zu $\varphi$ teilerfremd sind, und beide als Komponenten der ElGamal-Chiffre bezeichnet werden, unter Anwendung einer der folgenden zwei Alternativen:

$$C_1 = \text{ElGamalEnc}_{S_i}(h(D))$$

oder

$$C_1 = (E_i)^{h(D)},$$

  wobei im Falle der ersten Alternative ElGamalEnc die ElGamal-Verschlüsselung bezeichnet und der Wertebereich der Funktion h eine Teilmenge der Menge (H) ist, und wobei im Falle der zweiten Alternative für jeden Index i = 1, 2, ..., n die jeweilige Datenquelle ($DS_i$) in Zusammenarbeit mit den Mappern ($M_j$) eine solche ElGamal-Chiffre ($E_i$) des Werts $b_1 \cdot b_2 \cdot ... \cdot b_k$ erzeugt, die unter Verwendung des ElGamal-Privatschlüssels $x_1 \cdot x_2 \cdot ... \cdot x_k$ entschlüsselt werden kann:

$$\text{ElGamalResolve}(\text{ElGamalPartialDec}_{x_1 \cdot x_2 \cdot ... \cdot xk}(E_i))$$

$$= b_1 \cdot b_2 \cdot ... \cdot b_k \bmod \varphi$$

  wobei ElGamalPartialDec die partielle Entschlüsselung einer ElGamal-Chiffre bezeichnet und ElGamalResolve das Auflösen einer ElGamal-Chiffre bezeichnet,

  ii. Auswählen einer Zahl $\pi_1$ aus den Zahlen 1, 2, ..., k auf zufällige Weise, und
  iii. Senden der ElGamal-Chiffre ($C_1$) an den Mapper ($M_{\pi_1}$), der der Zahl $\pi_1$ entspricht,

- für jede im System empfangene ElGamal-Chiffre ($C_1$) führen die Mapper ($M_j$) für jeden Index j = 1, 2, ..., k in der folgenden Reihenfolge die folgenden Operationen aus:

  i. der jeweilige Mapper ($M_{\pi_j}$) prüft, ob beide Komponenten der ElGamal-Chiffre $C_j$ Elemente der Menge (H) sind, und setzt den Prozess nur dann fort, wenn das Ergebnis der Prüfung positiv ist,
  ii. der jeweilige Mapper ($M_{\pi_j}$) berechnet die nachfolgende ElGamal-Chiffre ($C_{j+1}$):

$$C_{j+1} = \text{ElGamalRerand}_{R_{\pi_j}}((C_j)^{\alpha_{\pi_j}})$$

  wobei ElGamalRerand die Neuzufallsbildung einer ElGamal-Chiffre bezeichnet,
  iii. wenn j < k ist, dann wählt der jeweilige Mapper ($M_{\pi_j}$) aus den Zahlen 1, 2, ..., k auf zufällige Weise eine solche Zahl $\pi_{j+1}$ aus, die nicht unter den Zahlen $\pi_1, \pi_2, ..., \pi_j$ ist, und sendet sodann in einer Nachricht die

nachfolgende ElGamal-Chiffre ($C_{j+1}$) an den der Zahl $\pi_{j+1}$ entsprechenden Mapper ($M_{\pi j+1}$),

iv. wenn j = k ist, dann wählt der jeweilige Mapper ($M_{\pi j}$) auf zufällige Weise eine Zahl $\varrho_1$ aus den Zahlen 1, 2, ..., k und sendet in einer Nachricht an den der Zahl $\varrho_1$ entsprechenden Mapper ($M_{\varrho_1}$) die folgende Information:

$$Z_1 = g$$

$$K_1 = R_{\pi k}$$

$$U_1 = C_{k+1}$$

- danach führen die Mapper ($M_{\varrho i}$) für jeden Index j = 1, 2, ..., k in dieser Reihenfolge die folgenden Operationen aus:

i. der jeweilige Mapper ($M_{\varrho i}$) prüft, ob beide Komponenten der ElGamal-Chiffre $U_j$ Elemente der Menge (H) sind, und setzt den Prozess nur dann fort, wenn das Ergebnis der Prüfung positiv ist,

ii. der jeweilige Mapper ($M_{\varrho i}$) prüft, ob beide Komponenten des ElGamal-öffentlichen Schlüssels $K_j$ Elemente der Menge (H) sind, und setzt den Prozess nur dann fort, wenn das Ergebnis der Prüfung positiv ist,

iii. der jeweilige Mapper ($M_{\varrho i}$) wählt auf zufällige Weise eine ganze Zahl $e_j$ aus der Menge (H) und bestimmt eine ganze Zahl $f_j$ derart, dass $e_j \cdot f_j = 1 \bmod \varphi$,

iv. der jeweilige Mapper ($M_{\varrho j}$) berechnet Folgendes:

einen Wert ($Z_{j+1}$): $Z_{j+1} = (Z_j)^{e_j}$,

einen Schlüssel ($K_{j+1}$): $K_{j+1} = \mathrm{ElGamalKeyRerand}(K_j \ominus X_{\varrho j})$, und

eine Chiffre ($U_{j+1}$): $U_{j+1} = \mathrm{ElGamalRerand}_{K_{j+1}}(\mathrm{ElGamalPartialDec}_{X_{\varrho j}}(U_j) \cdot f_j)$,
wobei ElGamalKeyRerand die Neuzufallsbildung eines ElGamal-Schlüssels bezeichnet,

v. wenn j < k ist, dann wählt der jeweilige Mapper ($M_{\varrho i}$) aus den Zahlen 1, 2, ..., k auf zufällige Weise eine solche Zahl $\varrho_{j+1}$ aus, die nicht unter den Zahlen $\varrho_1, \varrho_2, ..., \varrho_j$ ist, und sendet sodann in einer Nachricht an den der gewählten Zahl $\varrho_{j+1}$ entsprechenden Mapper ($M_{\varrho j+1}$) den im vorhergehenden Schritt erzeugten Wert ($Z_{j+1}$), den Schlüssel ($K_{j+1}$) und die Chiffre ($U_{j+1}$),

vi. und wenn j = k ist, dann erzeugt der jeweilige Mapper ($M_{\varrho j}$) das der Entitätskennung (D) entsprechende Pseudonym (P):

$$P = (Z_{k+1})^{\mathrm{ElGamalResolve}(U_{j+1})}.$$

2. Verfahren nach Anspruch 1, **dadurch gekennzeichnet, dass** im Verlauf der Erzeugung der ersten ElGamal-öffentlichen Schlüssel ($R_j$)

- für jeden Index j = 1, 2, ..., k:

vii. wählt der jeweilige Mapper ($M_j$) auf zufällige Weise eine ganze Zahl $r_j$ aus der Menge (H),
viii. wählt der jeweilige Mapper ($M_j$) auf zufällige Weise eine ganze Zahl $t_j$,
ix. erzeugt der jeweilige Mapper ($M_j$) unter Verwendung der gewählten Zahl $t_j$ einen entsprechenden ElGamal-öffentlichen Schlüssel ($K_{j,1}$): $K_{j,1} = (r_j, (r_j)^{t_j} \bmod \varphi)$,
x. wenn j > 1 ist, sendet der jeweilige Mapper ($M_j$) an den ersten Mapper ($M_1$) den der gewählten Zahl $t_j$ entsprechenden ElGamal-öffentlichen Schlüssel ($K_{j,1}$),
xi. für jeden Index $\tau$ = 1, 2, ..., k prüft der jeweilige Mapper ($M_\tau$) in dieser Reihenfolge, ob beide Komponenten des jeweiligen ElGamal-öffentlichen Schlüssels ($K_{j,\tau}$) Elemente der Menge (H) sind, und berechnet hieraus, wenn das Ergebnis der Prüfung positiv ist, den nachfolgenden ElGamal-öffentlichen Schlüssel ($K_{j,\tau+1}$): $K_{j,\tau+1}$ = ElGamalKeyRerand($K_{j,\tau} \oplus x_\tau$), und sendet ihn, falls $\tau < k$ ist, an den nachfolgenden Mapper ($M_{\tau+1}$),
xii. der letzte Mapper ($M_k$) sendet an den jeweiligen Mapper ($M_j$) den nachfolgenden ElGamal-öffentlichen Schlüssel ($K_{j,k+1}$), und
xiii. der jeweilige Mapper ($M_j$) erzeugt und speichert den ersten ElGamal-öffentlichen Schlüssel ($R_j$): $R_j$ = $K_{j,k+1} \ominus t_j$.

3. Verfahren nach Anspruch 1 oder 2, **dadurch gekennzeichnet, dass** im Verlauf der Erzeugung der zweiten ElGamal-öffentlichen Schlüssel ($S_i$)

- für jeden Index i = 1, 2, ..., n:

i. die jeweilige Datenquelle ($DS_i$) auf zufällige Weise eine ganze Zahl $s_i$ aus der Menge (H) wählt,
ii. die jeweilige Datenquelle ($DS_i$) auf zufällige Weise eine ganze Zahl $u_i$ wählt,
iii. die jeweilige Datenquelle ($DS_i$) den den gewählten Zahlen entsprechenden ElGamal-öffentlichen Schlüssel ($L_{i,1}$) erzeugt: $L_{i,1}$ = ($s_i$, ($s_i$)$^{u_i}$ mod $\varphi$),
iv. die jeweilige Datenquelle ($DS_i$) den den gewählten Zahlen entsprechenden ElGamal-öffentlichen Schlüssel ($L_{i,1}$) an den ersten Mapper ($M_1$) sendet,
v. für jeden Index $\tau$ = 1, 2, ..., k der jeweilige Mapper ($M_\tau$) in dieser Reihenfolge prüft, ob beide Komponenten des empfangenen ElGamal-öffentlichen Schlüssels ($L_{i,\tau}$) Elemente der Menge (H) sind, und hieraus, wenn das Ergebnis der Prüfung positiv ist, den nachfolgenden ElGamal-öffentlichen Schlüssel ($L_{i,\tau+1}$) berechnet: $L_{i,\tau+1}$ = ElGamalKeyRerand($L_{i,\tau} \oplus x_\tau$), und ihn, falls $\tau < k$ ist, an den nachfolgenden Mapper ($M_{\tau+1}$) sendet,
vi. der letzte Mapper ($M_k$) an die jeweilige Datenquelle ($DS_i$) den nachfolgenden ElGamal-öffentlichen Schlüssel ($L_{i,k+1}$) sendet, und
vii. die jeweilige Datenquelle ($DS_i$) den zweiten ElGamal-öffentlichen Schlüssel ($S_i$) erzeugt und speichert: $S_i$ = $L_{i,k+1} \ominus u_i$.

4. Verfahren nach einem der Ansprüche 1 bis 3, **dadurch gekennzeichnet, dass** die zum Entschlüsseln unter Verwendung des ElGamal-Privatschlüssels eingerichteten ElGamal-Chiffren ($E_i$) wie folgt erzeugt werden:

- für jeden Index i = 1, 2, ..., n:

i. wählt die Datenquelle ($DS_i$) auf zufällige Weise einen Wert $\gamma_{i,0}$ aus der Menge (H),
ii. erzeugt die Datenquelle ($DS_i$) die der gewählten Zahl entsprechende Chiffre ($\gamma_{i,1}$): $\gamma_{i,1}$ = ElGamalEnc$_{S_i}$($\gamma_{i,0}$),
iii. sendet die Datenquelle ($DS_i$) die Chiffre ($\gamma_{i,1}$) an den ersten Mapper ($M_1$),
iv. prüft für jeden Index j = 1, 2, ..., k der jeweilige Mapper ($M_j$) in dieser Reihenfolge, ob beide Komponenten der jeweiligen ElGamal-Chiffre ($\gamma_{i,j}$) Elemente der Menge (H) sind, und berechnet hieraus, wenn das Ergebnis der Prüfung positiv ist, die nachfolgende Chiffre ($\gamma_{i,j+1}$): $\gamma_{i,j+1}$ = ElGamalRerandR$_j$($\gamma_{i,j}$) $\cdot$ $b_j$, und sendet, falls j < k ist, die berechnete Chiffre ($\gamma_{i,j+1}$) an den nachfolgenden Mapper ($M_{j+1}$),
v. der letzte Mapper ($M_k$) die berechnete Chiffre ($\gamma_{i,k+1}$), die er empfangen hat, an die Datenquelle ($DS_i$) sendet, und
vi. die Datenquelle ($DS_i$) die ElGamal-Chiffre ($E_i$) erzeugt und speichert: $E_i$ = $\gamma_{i,k+1} \cdot$ (($\gamma_{i,0}$)$^{-1}$ mod $\varphi$).

5. Verfahren nach einem der Ansprüche 1 bis 4, **dadurch gekennzeichnet, dass**:

- zur Berechnung der ElGamal-Chiffre ($C_1$) die erste Alternative von allen Datenquellen ($DS_i$) für jede Entitätskennung (D) angewendet wird: $C_1$ = ElGamalEnc$_{S_i}$(h(D)), wobei der Wertebereich der Funktion h eine Teilmenge der Menge (H) ist,
oder
- zur Berechnung der ElGamal-Chiffre ($C_1$) die zweite Alternative von allen Datenquellen ($DS_i$) für jede Entitätskennung (D) angewendet wird: $C_1$ = ($E_i$)$^{h(D)}$.

6. Verfahren nach einem der Ansprüche 1 bis 5, **dadurch gekennzeichnet, dass** die algebraische Gruppe (G), das Erzeugerelement (g) und die Menge (H) durch den folgenden Algorithmus vorbestimmt werden:

i. zufälliges Auswählen, gemäß einer Gleichverteilung, einer Primzahl q, deren Binärdarstellung aus B Bits besteht,
ii. Suchen nach einer ganzen Zahl r zwischen 2 und B, für die gilt, dass p = r $\cdot$ q + 1 prim ist; wenn keine solche Zahl r gefunden werden kann, Rückkehr zu Schritt i,

iii. Suchen nach einer ganzen Zahl s zwischen 2 und B, für die gilt, dass $N = s \cdot p + 1$ prim ist; wenn keine solche Zahl s gefunden werden kann, Rückkehr zu Schritt i,

iv. zufälliges Auswählen, gemäß einer Gleichverteilung, ganzer Zahlen zwischen 2 und $(p - 1)$, bis eine solche Zahl f gefunden ist, dass f zu p teilerfremd ist und $f^s \not\equiv 1 \bmod N$,

v. Definieren des Erzeugerelements g als den Wert $f^s \bmod N$ und Definieren der Gruppe G als eine Gruppe reduzierter Restklassen a modulo N, für die gilt, dass $a^s \not\equiv 1 \bmod N$ und $a^p \equiv 1 \bmod N$,

vi. Definieren der Menge (H) als eine Menge ganzer Zahlen a zwischen 1 und p, wobei a zu p teilerfremd ist, $a^r \not\equiv 1 \bmod p$ und $a^q \equiv 1 \bmod p$.

7. Verfahren nach Anspruch 6, **dadurch gekennzeichnet, dass** in dem zur Definition der algebraischen Gruppe (G), des Erzeugerelements (g) und der Menge (H) verwendeten Algorithmus ein in folgender Weise bestimmter pseudorandomisierter Zahlengenerator angewendet wird:

- jeder Mapper ($M_j$) wählt eine ganze Zahl $N_j$ aus einem vorbestimmten Bereich,
- jeder Mapper ($M_j$) veröffentlicht einen Commit-Wert $F(N_j)$, wobei F eine kryptografische Hash-Funktion ist,
- jeder Mapper ($M_j$) wartet, bis sämtliche Werte $F(Ni)$ veröffentlicht sind,
- jeder Mapper ($M_j$) veröffentlicht seinen eigenen Wert $N_j$,
- die Mapper ($M_j$) berechnen den Wert $N_1 \oplus N_2 \oplus ... \oplus N_k$, wobei das Symbol $\oplus$ eine bitweise XOR-Operation bezeichnet,
- der Wert $N_1 \oplus N_2 \oplus ... \oplus N_k$ wird als Seed des pseudorandomisierten Zahlengenerators verwendet, der zur Definition der algebraischen Gruppe (G), des Erzeugerelements (g) und der Menge (H) benutzt wird.

8. Verfahren nach einem der Ansprüche 1 bis 7, **dadurch gekennzeichnet, dass** zu jeder Entitätskennung (D) ein oder mehrere Attribute (A) gehören, welches/welche in unverschlüsselter Form an die als verschlüsselte Entitätskennung berechnete ElGamal-Chiffre ($C_1$), an den im Verlauf der Pseudonymberechnung berechneten Wert und an die berechneten Pseudonyme (P) angehängt wird/werden, wonach ein Abgleichen und/oder Sammeln der Attribute (A) auf der Grundlage der Pseudonyme (P) erfolgt.

9. Verfahren nach einem der Ansprüche 1 bis 7, **dadurch gekennzeichnet, dass** zu jeder Entitätskennung (D) ein oder mehrere Attribute (A) gehören, welches/welche von der Datenquelle ($DS_i$) in verschlüsselter Form an die als verschlüsselte Entitätskennung berechnete ElGamal-Chiffre ($C_1$) angehängt wird/werden, derart, dass

- das der Entitätskennung (D) entsprechende Attribut (A) von der Datenquelle ($DS_i$) auf die folgende Weise verschlüsselt wird:

$$A_{1,1} = ElGamalEncrypt_{S_i}(A)$$

- dann wird zusätzlich zu der ElGamal-Chiffre ($C_1$) auch das verschlüsselte Attribut ($A_{1,1}$) von der Datenquelle ($DS_i$) in einer Nachricht an den Mapper ($M_{\pi_1}$) gesendet,
- für jeden Index $j = 1, 2, ..., k$:

i. nach dem Empfangen des an eine ElGamal-Chiffre ($C_1$) angehängten verschlüsselten Attributs ($A_{1,1}$) prüft der jeweilige Mapper ($M_{\pi_j}$), ob beide Komponenten desselben aus der Menge (H) stammen, und berechnet hieraus, wenn das Ergebnis der Prüfung positiv ist, den nachfolgenden Wert ($A_{1,j+1}$) des verschlüsselten Attributs auf die folgende Weise:

$$A_{1,j+1} = ElGamalRerandomize_{R_{\pi_j}}(A_{1,j})$$

ii. wenn $j < k$ ist, dann sendet der jeweilige Mapper ($M_{\pi_j}$) zusätzlich zu der nachfolgenden ElGamal-Chiffre ($C_{j+1}$) auch den nachfolgenden Wert ($A_{1,j+1}$) des verschlüsselten Attributs in einer an den nachfolgenden Mapper ($M_{\pi_{j+1}}$) gesendeten Nachricht,

iii. wenn $j = k$ ist, dann sendet der jeweilige Mapper ($M_{\pi_j}$) zusätzlich zu den Werten $Z_1$, $K_1$, $U_1$ in einer an den der Zahl $\varrho_1$ entsprechenden Mapper ($M_{\varrho_1}$) gerichteten Nachricht einen Wert $A_{2,1} = A_{1,j+1}$, der als der nachfolgende Wert des verschlüsselten Attributs berechnet wird und dem ersten verschlüsselten Attributwert ($A_{2,1}$) der nachfolgenden Mapper-Reihenfolge entspricht, und sodann

- für jeden Index j = 1, 2, ..., k:

    i. wenn beide Komponenten des verschlüsselten Attributwerts ($A_{2,j}$) Elemente der Menge (H) sind, dann berechnet der jeweilige Mapper ($M_{\varrho i}$) hieraus den nachfolgenden Wert des verschlüsselten Attributs ($A_{2,j+1}$) auf die folgende Weise:

$$A_{2,j+1} = \text{ElGamalRerandomizeR}_{\varrho j}(A_{2,j})$$

    ii. wenn j < k ist, dann sendet der jeweilige Mapper ($M_{\varrho i}$) auch den nachfolgenden Wert ($A_{2,j+1}$) des verschlüsselten Attributs an den nachfolgenden Mapper ($M_{\varrho j+1}$) in einer Nachricht, die den Wert ($Z_{j+1}$), den Schlüssel ($K_{j+1}$) und die Chiffre ($U_{j+1}$) enthält,
    iii. die endgültige verschlüsselte Form ($A_{2,k+1}$) des Entitätsattributs wird schließlich erhalten.

10. Computersystem zur Durchführung des Verfahrens nach einem der Ansprüche 1 bis 9, wobei das System umfasst:

    - Datenquellen ($DS_i$), die auf Entitäten bezogene Daten enthalten,
    - mehr als einen, nämlich eine Anzahl k von Mappern ($M_j$),
    - ein Modul, das zur Erzeugung kryptografischer Schlüssel der Datenquellen eingerichtet ist,
    - ein Modul, das zur Speicherung der kryptografischen Schlüssel der Datenquellen eingerichtet ist,
    - ein Modul, das zur Erzeugung kryptografischer Schlüssel der Mapper eingerichtet ist,
    - ein Modul, das zur Speicherung der kryptografischen Schlüssel der Mapper eingerichtet ist,
    - ein Modul, das zum Verschlüsseln der Entitätskennungen (D) eingerichtet ist, und
    - ein Modul, das zur Zuordnung der verschlüsselten Entitätskennungen ($C_1$) zu den Pseudonymen (P) eingerichtet ist.

11. Computersystem nach Anspruch 10, **dadurch gekennzeichnet, dass** es ferner umfasst:

    - bei den Datenquellen ($DS_i$) gespeicherte Datenbanken ($DBI_i$), in denen die Daten unter Anwendung der Entitätskennungen (D) der Entitäten identifiziert werden, und
    - eine Datenbank (DBP), die pseudonymisierte Daten enthält, in der die pseudonymisierten Daten durch Pseudonyme (P) identifiziert werden, die den jeweiligen Entitätskennungen (D) unter Anwendung einer Eins-zu-eins-Zuordnung zugeordnet sind.

12. Computersystem nach Anspruch 10 oder 11, **dadurch gekennzeichnet, dass** das System ferner umfasst:

    - von den Datenquellen ($DS_i$) ausgesendete Datenströme ($SI_i$), wobei die Daten durch die Entitätskennungen (D) der Entitäten identifiziert werden, und
    - einen Datenstrom (SP), der pseudonymisierte Daten enthält, wobei die pseudonymisierten Daten durch Pseudonyme (P) identifiziert werden, die den jeweiligen Entitätskennungen (D) unter Anwendung einer Eins-zu-eins-Zuordnung zugeordnet sind.

13. Computersystem nach einem der Ansprüche 10 bis 12, **dadurch gekennzeichnet, dass** es ferner umfasst:

    - einen Schlüsselmanager, der zur Speicherung und/oder Erzeugung der kryptografischen Schlüssel der Datenquellen ($DS_i$) eingerichtet ist, und
    - einen Schlüsselmanager, der zur Speicherung und/oder Erzeugung der kryptografischen Schlüssel der Mapper ($M_j$) eingerichtet ist.

14. Computerprogramm mit Anweisungen, die, wenn das Programm von einem Computer ausgeführt wird, den Computer veranlassen, die Schritte eines der Verfahren nach einem der Ansprüche 1 bis 9 durchzuführen.

15. Computerlesbares Medium, das zur Speicherung des Computerprogramms nach Anspruch 14 eingerichtet ist.

**Revendications**

1. Procédé de mappage cryptographique de pseudonymes pour un système de partage de données anonymes, le procédé étant adapté pour générer des données pseudonymisées à partir de données d'entités provenant de sources de données ($DS_i$), dans lequel les données sont identifiées au niveau des sources de données ($DS_i$) par des identifiants d'entités (D) des entités respectives, et dans lequel les données pseudonymisées sont identifiées par des pseudonymes (P) attribués aux identifiants d'entités (D) respectifs en appliquant un mappage un à un,

   **caractérisé par** l'application de, pour un nombre n de sources de données ($DS_i$)

   - plus d'un, un nombre k de mappeurs ($M_j$),
   - avec un groupe (G) algébrique ayant un ordre $\varphi$, et dans celui-ci, un élément générateur (g) du groupe (G) algébrique étant prédéterminé par rapport aux mappeurs ($M_j$) et sources de données ($DS_i$), et avec un ensemble (H) qui est également prédéterminé, ledit ensemble (H) étant un sous-ensemble d'entiers qui sont premiers avec $\varphi$ qui forme un groupe algébrique quant à une multiplication modulo $\varphi$, en outre, un mappage (h) attribuant une valeur entière à chaque identifiant d'entité (D) par rapport aux mappeurs ($M_j$) et aux sources de données ($DS_i$) qui est également prédéterminé, et
   - pour chaque indice j = 1, 2, ..., k :

      i. le mappeur ($M_j$) réel sélectionnant pour lui-même, de manière aléatoire, un entier $x_j$ et un entier $\alpha_j$,
      ii. le mappeur ($M_j$) réel sélectionnant un entier $b_j$ dans l'ensemble (H) de manière aléatoire,

   dans lequel $b_j$, $x_j$ et $\alpha_j$ sont gardés secrets par le mappeur ($M_j$),

   - pour chaque indice j = 1, 2, ..., k le mappeur ($M_j$) réel générant, en coopérant avec les autres mappeurs ($M_j$), une première clé publique ElGamal ($R_j$) qui correspond à une clé privée $x_1 \cdot x_2 \cdot ... x_k$, et stockant la première clé publique ElGamal ($R_j$) générée par le mappeur ($M_j$) réel, dans lequel une clé publique ElGamal est une paire de nombres qui sont tous deux des entiers qui sont premiers avec $\varphi$ et tous deux appelés composantes de la clé publique ElGamal,
   - pour chaque indice i = 1, 2, ..., n la source de données ($DS_i$) réelle générant, en coopération avec les mappeurs ($M_j$), une seconde clé publique ElGamal ($S_i$) qui correspond à la clé privée $x_1 \cdot x_2 \cdot ... x_k$, et stockant la seconde clé publique ElGamal ($S_i$) générée par la source de données ($DS_i$) réelle, et,
   - au cours de la pseudonymisation d'un identifiant d'entité (D) par une source de données ($DS_i$), la source de données ($DS_i$)

      i. calculant un chiffre ElGamal ($C_1$) qui est une paire de nombres qui sont tous deux des entiers qui sont premiers avec $\varphi$ et tous deux appelés composantes du chiffre ElGamal, en appliquant l'une des deux alternatives suivantes :

$$C_1 = \mathrm{ElGamalEnc}_{S_i}(\mathrm{h}(D))$$

      ou

$$C_1 = (E_i)^{\mathrm{h}(D)},$$

      dans lequel, dans le cas de la première alternative, ElGamalEnc désigne un chiffrement ElGamal et la plage de la fonction h est un sous-ensemble de l'ensemble (H), et dans le cas de la seconde alternative, pour chaque indice i = 1, 2, ..., n la source de données ($DS_i$) réelle génère, en coopération avec les mappeurs ($M_j$), un chiffre ElGamal ($E_i$) de la valeur $b_1 \cdot b_2 \cdot ... \cdot b_k$ qui peut être déchiffré en utilisant la clé privée ElGamal $x_1 \cdot x_2 \cdot ... \cdot x_k$ :

$$\mathrm{ElGamalResolve}\left(\mathrm{ElGamalPartialDec}_{x_1 \cdot x_2 \cdot ... \cdot x_k}(E_i)\right)$$
$$\equiv b_1 \cdot b_2 \cdot .... \cdot b_k \bmod \varphi$$

      dans lequel ElGamalPartialDec désigne le déchiffrement partiel d'un chiffre ElGamal et ElGamal-

Resolve désigne la résolution d'un chiffre ElGamal,

ii. sélectionnant un nombre $\pi_1$ parmi les nombres 1, 2, ..., k de manière aléatoire, et

iii. envoyant le chiffre ElGamal ($C_1$) au mappeur ($M_{\pi_1}$) qui correspond au nombre $\pi_1$,

- pour chaque chiffre ElGamal ($C_1$) reçu dans le système, les mappeurs ($M_j$) réalisant les opérations suivantes pour chaque indice j = 1, 2, ..., k dans l'ordre suivant :

i. le mappeur ($M_{\pi_j}$) réel vérifie si les deux composantes du chiffre ElGamal $C_j$ sont des éléments de l'ensemble (H), et continue le processus uniquement dans le cas où le résultat de la vérification est positif,

ii. le mappeur ($M_{\pi_j}$) réel calcule le chiffre ElGamal suivant ($C_{j+1}$) :

$$C_{j+1} = \mathrm{ElGamalRerand}_{R_{\pi_j}}\left(\left(C_j\right)^{\alpha_{\pi_j}}\right),$$

dans lequel ElGamalRerand désigne la rerandomisation d'un chiffre ElGamal,

iii. si j < k, alors le mappeur ($M_{\pi_j}$) réel sélectionne aléatoirement parmi les nombres 1, 2, ..., k un nombre $\pi_{j+1}$ qui n'est pas parmi les nombres $\pi_1, \pi_2, ..., \pi_j$, puis envoie dans un message le chiffre ElGamal suivant ($C_{j+1}$) au mappeur ($M_{\pi_{j+1}}$) correspondant au nombre $\pi_{j+1}$,

iv. si j = k, alors le mappeur ($M_{\pi_j}$) réel choisit aléatoirement un nombre $\varrho_1$ parmi les nombres 1, 2, ..., k, et envoie dans un message au mappeur ($M_{\varrho_1}$) correspondant au nombre $\varrho_1$ les informations suivantes :

$$Z_1 \;=\; g$$

$$K_1 \;=\; R_{\pi_k}$$

$$U_1 \;=\; C_{k+1}$$

- par la suite les mappeurs ($M_{\varrho_1}$) réalisant, pour chaque indice j = 1, 2, ..., k, dans cet ordre, les opérations suivantes :

i. le mappeur ($M_{\varrho_j}$) réel vérifie si les deux composantes du chiffre ElGamal $U_j$ sont des éléments de l'ensemble (H), et continue le processus uniquement dans le cas où le résultat de la vérification est positif,

ii. le mappeur ($M_{\varrho_j}$) réel vérifie si les deux composantes de la clé publique ElGamal $K_j$ sont des éléments de l'ensemble (H), et continue le processus uniquement dans le cas où le résultat de la vérification est positif,

iii. le mappeur ($M_{\varrho_j}$) réel choisit aléatoirement un entier dans l'ensemble (H) et détermine un entier $f_j$ de sorte que : $e_j \cdot f_j \equiv 1 \bmod \varphi$

iv. le mappeur ($M_{\varrho_j}$) réel calcule ce qui suit :

une valeur ($Z_{j+1}$) : $Z_{j+1} = (Z_j)^{e_j}$ ,

une clé ($K_{j+1}$) : $K_{j+1} = \mathrm{ElGamalKeyRerand}\,(K_j\,\theta\,^{X_{\varrho_j}})$, et
un chiffre ($U_{j+1}$) :

$$U_{j+1} \;=\; \mathrm{ElGamalRerand}_{K_{j+1}}\left(\mathrm{ElGamalPartialDec}_{x_{\varrho_j}}(U_j) \cdot f_j\right),$$

dans lequel ElGamalKeyRerand désigne la rerandomisation d'une clé ElGamal,

v. si j < k, alors le mappeur ($M_{\varrho_j}$) réel choisit aléatoirement parmi les nombres 1, 2, ..., k un nombre $\varrho_{j+1}$ qui n'est pas parmi les nombres $\varrho_1$, $\varrho_2$, ..., $\varrho_j$, puis envoie dans un message au mappeur ($M_{\varrho_{j+1}}$) correspondant au nombre $\varrho_{j+1}$ choisi la valeur ($Z_{j+1}$), la clé ($K_{j+1}$) et le chiffre ($U_{j+1}$) générés à l'étape précédente,

vi. et si j = k, alors le mappeur ($M_{\varrho_j}$) réel génère le pseudonyme (P) correspondant à l'identifiant d'entité (D) :

$$P = (Z_{k+1})^{\text{ElGamalResolve}(U_{j+1})}$$

2. Procédé selon la revendication 1, **caractérisé en ce que**, au cours de la génération des premières clés publiques ElGamal ($R_j$),

    - pour chaque indice j = 1, 2, ..., k :

        vii. le mappeur ($M_j$) réel choisit aléatoirement un entier $r_j$ dans l'ensemble (H),
        viii. le mappeur ($M_j$) réel choisit aléatoirement un nombre $t_j$ entier,
        ix. en utilisant le nombre $t_j$ choisi, le mappeur ($M_j$) réel génère une clé publique ElGamal ($K_{j,1}$) correspondant à celui-ci : $K_{j,1} = (r_j, (r_j)^{t_j} \bmod \varphi)$,
        x. si j > 1, alors le mappeur ($M_j$) réel envoie au premier mappeur ($M_1$) la clé publique ElGamal ($K_{j,1}$) correspondant au nombre $t_j$ choisi,
        xi. pour chaque indice $\tau$ = 1, 2, ..., k, dans cet ordre, le mappeur ($M_\tau$) réel vérifie si les deux composantes de la clé publique ElGamal réelle ($K_{j,\tau}$) sont des éléments de l'ensemble (H), et, si le résultat de la vérification est positif, il calcule à partir de celles-ci la clé publique ElGamal suivante ($K_{j,\tau+1}$) : $K_{j,\tau+1}$ = ElGamalKeyRerand($K_{j,\tau} \oplus x_\tau$), et si $\tau$ < k, l'envoie au mappeur suivant ($M_{\tau+1}$),
        xii. le dernier mappeur ($M_k$) envoie au mappeur ($M_j$) réel la clé publique ElGamal suivante ($K_{j,k+1}$), et
        xiii. le mappeur ($M_j$) réel génère et stocke la première clé publique ElGamal ($R_j$) : $R_j = K_{j,k+1} \ominus t_j$.

3. Procédé selon les revendications 1 ou 2, **caractérisé en ce que**, au cours de la génération des secondes clés publiques ElGamal ($S_i$),

    - pour chaque indice i = 1, 2, ..., n :

        i. la source de données ($DS_i$) réelle choisit aléatoirement un nombre entier $s_i$ dans l'ensemble (H),
        ii. la source de données ($DS_i$) réelle choisit aléatoirement un nombre entier $u_i$
        iii. la source de données ($DS_i$) réelle génère la clé publique ElGamal ($L_{i,1}$) qui correspond aux nombres choisis : $L_{i,1} = (s_i, (s_i)^{u_i} \bmod \varphi)$,
        iv. la source de données ($DS_i$) réelle envoie au premier mappeur ($M_1$) la clé publique ElGamal ($L_{i,1}$) qui correspond aux nombres choisis,
        v. pour chaque indice $\tau$ = 1, 2, ..., k, dans cet ordre, le mappeur ($M_\tau$) réel vérifie si les deux composantes de la clé publique ElGamal reçue ($L_{i,\tau}$) sont des éléments de l'ensemble (H), et, si le résultat de la vérification est positif, il calcule la clé publique ElGamal suivante ($L_{i,\tau+1}$) : $L_{i,\tau+1}$ = ElGamalKeyRerand ($L_{i,\tau} \oplus x_\tau$), et si $\tau$ < k, il l'envoie au mappeur suivant ($M_{\tau+1}$),
        vi. le dernier mappeur ($M_k$) envoie à la source de données ($DS_i$) réelle la clé publique ElGamal suivante ($L_{i,k+1}$), et
        vii. la source de données ($DS_i$) réelle génère et stocke la seconde clé publique ElGamal ($S_i$) : $S_i = L_{i,k+1} \ominus u_i$.

4. Procédé selon l'une des revendications 1 à 3, **caractérisé en ce que** les chiffres ElGamal ($E_i$) adaptés pour être déchiffrés en utilisant la clé privée ElGamal sont générés comme suit :

    - Pour chaque indice i = 1, 2, ..., n :

        i. la source de données ($DS_i$) choisit aléatoirement une valeur $\gamma_{i,0}$ dans l'ensemble (H).
        ii. la source de données ($DS_i$) génère le chiffre ($\gamma_{i,1}$) correspondant à la valeur choisie : $\gamma_{i,1}$ = ElGamalEnc$_{S_i}$ ($\gamma_{i,0}$),

iii. la source de données ($DS_i$) envoie le chiffre ($\gamma_{i,1}$) au premier mappeur ($M_1$),

iv. pour chaque indice j = 1, 2, ..., k, dans cet ordre, le mappeur ($M_j$) réel vérifie si les deux composantes du chiffre ElGamal réel ($\gamma_{i,j}$) sont des éléments de l'ensemble (H), et, si le résultat de la vérification est positif, il calcule le chiffre suivant ($\gamma_{i,j+1}$) : $\gamma_{i,j+1} = \text{ElGamalRerand}_{R_j}(\gamma_{i,j}) \cdot b_j$, et si j < k, il envoie le chiffre calculé ($\gamma_{i,j+1}$) au mappeur suivant ($M_{j+1}$),

v. le dernier mappeur ($M_k$) envoie le chiffre calculé ($\gamma_{i,k+1}$) qu'il a reçu à la source de données ($DS_i$), et

vi. la source de données ($DS_i$) génère et stocke le chiffre ElGamal ($E_i$) : $E_i = \gamma_{i,k+1} \cdot ((\gamma_{i,0})^{-1} \bmod \varphi)$.

**5.** Procédé selon l'une des revendications 1 à 4, **caractérisé en ce que** :

- pour calculer le chiffre ElGamal ($C_1$), la première alternative est appliquée par toutes les sources de données ($DS_i$) pour chaque identifiant d'entité (D) : $C_1 = \text{ElGamalEnc}_{S_i}(h(D))$, où la plage de la fonction h est un sous-ensemble de l'ensemble (H),

ou

- pour calculer le chiffre ElGamal ($C_1$), la seconde alternative est appliquée par toutes les sources de données ($DS_i$) pour chaque identifiant d'entité (D) : $C_1 = (E_i)^{h(D)}$.

**6.** Procédé selon l'une des revendications 1 à 5, **caractérisé en ce que** le groupe (G) algébrique, l'élément générateur (g) et l'ensemble (H) sont prédéterminés par l'algorithme suivant :

i. choisir aléatoirement, selon une distribution uniforme, un nombre premier q, dont la représentation binaire est constituée de B bits,

ii. rechercher un entier r entre 2 et B pour lequel on considère comme vrai que $p = r \cdot q + 1$ est premier ; si aucun r ne peut être trouvé, retourner à l'étape i,

iii. rechercher un entier s entre 2 et B pour lequel on considère comme vrai que $N = s \cdot p + 1$ est premier ; si aucun s ne peut être trouvé, retourner à l'étape i,

iv. choisir aléatoirement, selon une distribution uniforme, des nombres entiers entre 2 et (p - 1) jusqu'à ce qu'un nombre f soit trouvé, ce f étant premier avec p, et $f^s \not\equiv 1 \bmod N$,

v. définir l'élément générateur g comme la valeur $f^s \bmod N$, et définir le groupe G comme un groupe de classes de résidus réduits a sur modulo N pour lequel on considère comme vrai que $a^s \not\equiv 1 \bmod N$ et $a^p \equiv 1 \bmod N$,

vi. définir l'ensemble (H) comme un ensemble d'entiers a entre 1 et p où a est premier avec p, $a^r \not\equiv 1 \bmod P$, et $a^q \equiv 1 \bmod p$.

**7.** Procédé selon la revendication 6, **caractérisé en ce qu'**un générateur de nombres pseudoaléatoires déterminé de la manière suivante est appliqué dans l'algorithme utilisé pour définir le groupe (G) algébrique, l'élément générateur (g) et l'ensemble (H) :

- chaque mappeur ($M_j$) choisit un entier $N_j$ dans une plage prédéterminée,
- chaque mappeur ($M_j$) publie une valeur d'engagement $F(N_j)$, où F est une fonction de hachage cryptographique,
- chaque mappeur ($M_j$) attend jusqu'à ce que toutes les valeurs $F(N_j)$ soient publiées,
- chaque mappeur ($M_j$) publie sa propre valeur $N_j$,
- les mappeurs ($M_j$) calculent la valeur $N_1 \oplus N_2 \oplus ... \oplus N_k$, où le symbole $\oplus$ désigne une opération ou exclusif bit à bit,
- la valeur $N_1 \oplus N_2 \oplus ... \oplus N_k$ est appliquée comme la graine du générateur de nombres pseudoaléatoires utilisé pour définir le groupe (G) algébrique, l'élément générateur (g) et l'ensemble (H).

**8.** Procédé selon l'une des revendications 1 à 7, **caractérisé en ce qu'**un ou plusieurs attributs (A) appartiennent à chaque identifiant d'entité (D), lesquels un ou plusieurs attributs sont attachés sous une forme non chiffrée au chiffre ElGamal ($C_1$) calculé en tant qu'identifiant d'entité chiffré, à la valeur calculée au cours d'un calcul de pseudonyme, et aux pseudonymes (P) calculés, puis les attributs (A) sont mis en correspondance et/ou collectés sur la base des pseudonymes (P).

**9.** Procédé selon l'une des revendications 1 à 7, **caractérisé en ce qu'**un ou plusieurs attributs (A) appartiennent à chaque identifiant d'entité (D), lesquels un ou plusieurs attributs sont attachés par la source de données ($DS_i$) sous une forme chiffrée au chiffre ElGamal ($C_1$) calculé en tant qu'identifiant d'entité chiffré, de telle sorte que

- l'attribut (A) correspondant à l'identifiant d'entité (D) soit chiffré par la source de données ($DS_i$) de la manière suivante :

$$A_{1,1} = \text{ElGamalEncrypt}_{S_i}(A)$$

- alors, en plus du chiffre ElGamal ($C_1$), l'attribut chiffré ($A_{1,1}$) est également envoyé par la source de données ($DS_i$) au mappeur ($M_{\pi 1}$) dans un message,
- pour chaque indice j = 1, 2, ..., k :

i. après la réception de l'attribut chiffré ($A_{1,1}$) attaché à un chiffre ElGamal ($C_1$), le mappeur ($M_{\pi j}$) réel vérifie si les deux composantes de celui-ci proviennent de l'ensemble (H), et, si le résultat de la vérification est positif, il calcule la valeur suivante ($A_{1,j+1}$) de l'attribut chiffré de la manière suivante :

$$A_{1,j+1} = \text{ElGamalRerandomize}_{R_{\pi_j}}(A_{1,j})$$

ii. si j < k, alors, en plus du chiffre ElGamal suivant ($C_{j+1}$), le mappeur ($M_{\pi j}$) réel envoie également la valeur suivante ($A_{1,j+1}$) de l'attribut chiffré dans un message envoyé au mappeur suivant ($M_{\pi j+1}$),
iii. si j = k, alors, en plus des valeurs $Z_1$, $K_1$, $U_1$, le mappeur ($M_{\pi j}$) réel envoie dans un message envoyé au mappeur ($M_{\varrho 1}$) correspondant au nombre $\varrho_1$ une valeur $A_{2,1} = A_{1,j+1}$ qui est calculée en tant que valeur suivante de l'attribut chiffré et qui correspond à la première valeur d'attribut chiffrée ($A_{2,1}$) de l'ordre suivant de mappeurs, puis

- pour chaque indice j = 1, 2, ..., k :

i. si les deux composantes de la valeur d'attribut chiffrée ($A_{2,j}$) sont des éléments de l'ensemble (H), alors le mappeur ($M_{\varrho j}$) réel calcule à partir de celles-ci la valeur suivante de l'attribut chiffré ($A_{2,j+1}$) de la manière suivante :

$$A_{2,j+1} = \text{ElGamalRerandomize}_{R_{\varrho_j}}(A_{2,j})$$

ii. si j < k, alors le mappeur ($M_{\varrho j}$) réel envoie également la valeur suivante ($A_{2,j+1}$) de l'attribut chiffré au mappeur suivant ($M_{\varrho j+1}$) dans un message contenant la valeur ($Z_{j+1}$, la clé ($K_{j+1}$) et le chiffre ($U_{j+1}$),
iii. la forme chiffrée finale ($A_{2,k+1}$) de l'attribut d'entité est finalement obtenue.

**10.** Système informatique mettant en œuvre le procédé selon l'une des revendications 1 à 9, le système comprenant

- des sources de données ($DS_i$) contenant des données liées à des entités,
- plus d'un, un nombre k de mappeurs ($M_j$),
- un module adapté pour générer des clés cryptographiques des sources de données,
- un module adapté pour stocker les clés cryptographiques des sources de données,
- un module adapté pour générer des clés cryptographiques des mappeurs,
- un module adapté pour stocker les clés cryptographiques des mappeurs,
- un module adapté pour chiffrer les identifiants d'entités (D), et
- un module adapté pour mapper les identifiants d'entités chiffrés ($C_1$) aux pseudonymes (P).

**11.** Système informatique selon la revendication 10, **caractérisé en ce qu'**il comprend en outre

- des bases de données ($DBI_i$) stockées au niveau des sources de données ($DS_i$), dans lesquelles les données sont identifiées en appliquant les identifiants d'entités (D) des entités, et
- une base de données (DBP) contenant des données pseudonymisées, dans lequel les données pseudonymisées sont identifiées par des pseudonymes (P) attribués aux identifiants d'entités (D) respectifs en appliquant un mappage bi-univoque.

**12.** Système informatique selon la revendication 10 ou 11, **caractérisé en ce que** le système comprend en outre

- des flux de données ($SI_i$) diffusés par les sources de données ($DS_i$), dans lequel les données sont identifiées par les identifiants d'entités (D) des entités, et
- un flux de données (SP) contenant des données pseudonymisées, dans lequel les données pseudonymisées sont identifiées par des pseudonymes (P) attribués aux identifiants d'entités (D) respectifs en appliquant un mappage bi-univoque.

13. Système informatique selon l'une des revendications 10 à 12, **caractérisé en ce qu'**il comprend en outre

- un gestionnaire de clés adapté pour stocker et/ou générer les clés cryptographiques des sources de données ($DS_i$), et
- un gestionnaire de clés adapté pour stocker et/ou générer les clés cryptographiques des mappeurs ($M_j$).

14. Programme informatique comprenant des instructions qui, lorsque le programme est exécuté par un ordinateur, amènent l'ordinateur à réaliser les étapes de l'un des procédés selon l'une des revendications 1 à 9.

15. Support lisible par ordinateur adapté pour stocker le programme informatique selon la revendication 14.

$M_j$

$$r_j \in H \qquad t_j \in \{1, 2, \ldots, \varphi\}$$
$$r_j \text{ random} \qquad t_j \text{ random}$$

$r_j$ $t_j$

$$K_{j,1} = (r_j, (r_j)^{t_j} \bmod \varphi)$$

$K_{j,1}$

$M_1$

$$K_{j,2} = \text{ElGamalKeyRerand}(K_{j,1} \oplus x_1)$$

$K_{j,2}$

$M_2$

$$K_{j,3} = \text{ElGamalKeyRerand}(K_{j,2} \oplus x_2)$$

Fig. 1A

Fig. 1B

$$s_i \in H \qquad u_i \in \{1, 2, \ldots, \varphi\}$$

$$s_i \text{ random} \qquad u_i \text{ random}$$

$$s_i \qquad u_i$$

$$\text{DS}_i$$

$$L_{i,1} = (s_i, (s_i)^{u_i} \bmod \varphi)$$

$$L_{i,1}$$

$$\text{M}_1 \qquad L_{i,2} = \text{ElGamalKeyRerand}(L_{i,1} \oplus x_1)$$

$$L_{i,2}$$

$$\text{M}_2 \qquad L_{i,3} = \text{ElGamalKeyRerand}(L_{i,2} \oplus x_2)$$

Fig. 2A

$$M_k \quad L_{i,k+1} = \text{ElGamalKeyRerand}(L_{i,k} \oplus x_k)$$

$$L_{i,k+1}$$

$$DS_i \quad S_i = L_{i,k+1} \ominus u_i$$

$$S_i$$

Fig. 2B

$$\gamma_{i,0} \in H$$

$$\gamma_{i,0} \text{ random}$$

$\gamma_{i,0}$

DS$_i$

$$\gamma_{i,1} = \mathrm{ElGamalEnc}_{S_i}(\gamma_{i,0})$$

$\gamma_{i,1}$

M$_1$ $\quad \gamma_{i,2} = \mathrm{ElGamalRerand}_{R_1}(\gamma_{i,1}) \cdot b_1$

$\gamma_{i,2}$

M$_2$ $\quad \gamma_{i,3} = \mathrm{ElGamalRerand}_{R_2}(\gamma_{i,2}) \cdot b_2$

Fig. 3A

Fig. 3B

Fig. 4A

$$C_{k+1} = \text{ElGamalRerand}_{R_{z_k}}(C_k^{e_{z_k}})$$

$C_{k+1}$

$$Z_1 = g \qquad K_1 = R_{z_k} \qquad U_1 = C_{k+1}$$

$M_{z_k}$

$Z_1 \qquad K_1 \qquad U_1$

$$
\begin{aligned}
&c_1 \in H & Z_2 &= (Z_1)^{r_1} \\
&e_1 \text{ random} & K_2 &= \text{ElGamalKeyRerand}(K_1 \ominus x_{g_1}) \\
&f_1 \equiv c_1^{-1} \bmod \varphi & U_2 &= \text{ElGamalRerand}\big(\text{ElGamalPartialDec}_{x_{g_1}}(U_1) \cdot f_1\big)
\end{aligned}
$$

$M_{g_1}$

$Z_2 \qquad K_2 \qquad U_2$

$$
\begin{aligned}
&c_2 \in H & Z_3 &= (Z_2)^{r_2} \\
&e_2 \text{ random} & K_3 &= \text{ElGamalKeyRerand}(K_2 \ominus x_{g_2}) \\
&f_2 \equiv c_2^{-1} \bmod \varphi & U_3 &= \text{ElGamalRerand}\big(\text{ElGamalPartialDec}_{x_{g_2}}(U_2) \cdot f_2\big)
\end{aligned}
$$

$M_{g_2}$

Fig. 4B

$$c_k \in H \qquad Z_{k+1} = (Z_k)^{e_k}$$

$$c_k \text{ random} \qquad K_{k+1} = \text{ElGamalKeyRerand}(K_k \ominus x_{g_k})$$

$$f_k \equiv c_k^{-1} \bmod \varphi \qquad U_{k+1} = \text{ElGamalRerand}\Big(\text{ElGamalPartialDec}_{x_{g_k}}(U_k) \cdot f_k\Big)$$

$M_{g_k}$

$Z_{k+1}$

$U_{k+1}$

$$\psi = (Z_{k+1})^{\text{ElGamalResolve}(U_{k+1})}$$

$$P(D) = \psi$$

DB

Fig. 4C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021009528 A1
- US 20110202764 A1
- WO 2017141065 A1
- US 20020041684 A1

**Non-patent literature cited in the description**

- **GEOFFROY COUTEAU**. New Protocols for Secure Equality Test and Comparison. *Applied Cryptography and Network Security*, ISSN 0302-9743, 303-320
- **DAVID CHAUM**. Untraceable electronic mail, return addresses, and digital pseudonyms. *Communications of the ACM*, February 1981, vol. 24 (2)
- ElGamal Algorithm for Encryption of Data Transmission. **ZENGQIANG WU et al.** International Conference on Mechatronics and Control (ICMC). IEEE, 03 September 2015
- **HENRY CORRIGAN-GIBBS** ; **DMITRY KOGAN**. *The Discrete-Logarithm Problem with Preprocessing*